# EUROPÄISCHE PATENTSCHRIFT

(11) **EP 2 584 221 B1**
(45) Veröffentlichungstag und Bekanntmachung des Hinweises auf die Patenterteilung: **06.08.2014**
(21) Anmeldenummer: 13151873.0
(22) Anmeldetag: 21.01.2010
(51) Int. Cl.: F16H 25/12, F16H 39/40, F16H 48/18, F16D 31/02, F01B 3/00, F16H 48/14

(54) **Getriebevorrichtung zum Übertragen eines Drehmoments und Vorrichtung zum Erzeugen oder Wandeln eines Drehmoments**
Transmission device for transferring a torque and apparatus for generating or converting a torque
Dispositif de transmission destiné à transmettre un couple et dispositif de production ou de conversion d'un couple

(30) Priorität: 21.01.2009 DE 102009005838; 14.08.2009 DE 202009011153 U
(43) Veröffentlichungstag der Anmeldung: 24.04.2013
(62) Teilanmeldung aus: 10704522.1
(73) Patentinhaber: Thien, Gerhard, 15848 Beeskow (DE)
(72) Erfinder: Thien, Gerhard, 15848 Beeskow (DE)
(74) Vertreter: Schröder, Christoph

(56) Entgegenhaltungen:
- DE-A1- 4 027 533
- JP-A- 62 129 526
- US-A1- 2004 149 122

## Beschreibung

Die Erfindung betrifft eine Vorrichtung zum Erzeugen oder Wandeln eines Drehmoments.

Eine derartige Vorrichtung zum Erzeugen oder Wandeln eines Drehmoments umfasst ein feststehendes Antriebselement und ein relativ zum feststehenden Antriebselement drehbares Abtriebselement, das ausgebildet ist, eine lineare Bewegung relativ zum Antriebselement auszuführen, wobei das feststehende Antriebselement über einen Eingriff in eine Nut mit dem Abtriebselement derart zwangsgekoppelt ist, dass das Abtriebselement, wenn das Abtriebselement angetrieben wird, gleichzeitig eine Drehbewegung und eine lineare Bewegung ausführt, wobei das Abtriebselement als zylindrische Hohlwelle ausgebildet ist, in die das feststehende Antriebselement eingreift.

Aus der DE 40 27 533 A1 ist ein Verbrennungsmotor bekannt, welcher eine unter den Wortlaut des Oberbegriffs des Anspruchs 1 fallende Vorrichtung darstellt und bei dem ein Kolben mit einem Zylinder derart zwangsgekoppelt ist, dass der Kolben bei einem Antreiben eine Drehbewegung und gleichzeitig eine lineare Bewegung relativ zu dem Zylinder ausführt.

Bei einem aus der US 2004/0149122 A1 bekannten Verbrennungsmotor ist ein Kolben in einem Zylinder geführt und mit dem Zylinder über einen Nuteingriff zwangsgekoppelt, so dass bei einem Antreiben der Kolben linear verstellt und gleichzeitig verdreht wird. Die Drehbewegung wird auf eine mit dem Kolben gekoppelte Abtriebswelle übertragen.

Aus der JP 62129526 A ist ein Motor bekannt, bei dem ein Kolben in einem Zylinder über eine Zwangskopplung verdreht wird.

Bei einer beispielsweise als Schaltgetriebe für ein Kraftfahrzeug ausgebildeten Getriebevorrichtung sind herkömmlich mehrere Zahnradsätze vorgesehen, um unterschiedliche Übersetzungsverhältnisse in die gleiche oder auch in die entgegengesetzte Drehrichtung zu erhalten. Bei in Kraftfahrzeugen üblichen Schaltgetrieben ist dabei zum Schalten des Getriebes und zum Wechseln der Übersetzung eine Unterbrechung des Kraftflusses erforderlich, die durch eine von einem Fahrer zu betätigende Kupplungsvorrichtung zur Verfügung gestellt wird.

Anstelle manuell zu betätigender Schaltgetriebe sind auch automatisierte Schaltgetriebe bekannt, bei denen die Steuerung einer Kupplungsvorrichtung und der Wechsel eines Ganges nicht mehr durch einen Fahrer, sondern durch Stellmotoren oder eine Hydraulik bewirkt wird.

Schaltgetriebe weisen durch die begrenzte Anzahl der Zahnradsätze bedingte diskrete Übersetzungsstufen auf. Im Gegensatz zu Schaltgetrieben ermöglichen stufenlose Getriebevorrichtungen, beispielsweise so genannte kontinuierlich variable Getriebe (CVT: Continuously Variable Transmission) oder so genannte unendlich variable Getriebe (IVT: Infinitely Variable Transmission), eine stufenlose Einstellung der Übersetzung. Stufenlose Getriebevorrichtungen können beispielsweise hydrostatisch, elektrisch oder mechanisch ausgeführt sein, wobei einzelne Schaltstufen entfallen, dadurch der Komfort der Getriebevorrichtung verbessert ist und keine Schaltpausen mehr auftreten. Stufenlose Getriebevorrichtungen weisen jedoch häufig eine begrenzte Drehmomentkapazität auf, erfordern einen erhöhten technischen Aufwand und haben regelmäßig einen schlechteren mechanischen Wirkungsgrad als konventionelle Schaltgetriebe.

Bei einer aus der DE 103 05 181 A1 bekannten Drehmomentübertragungseinheit ist ein mit einer Antriebswelle verbundener Zylinder drehbar in einem mit einer Abtriebswelle verbundenen, ebenfalls drehbar gelagerten Gehäuse angeordnet. Drehen sich der Zylinder und das Gehäuse mit unterschiedlichen Drehgeschwindigkeiten, so fördert der Zylinder einen Volumenstrom, der durch ein Volumenbegrenzungsventil eingestellt und über den das vom Zylinder auf das Gehäuse übertragene Drehmoment geregelt werden kann.

Der Erfindung liegt die Aufgabe zugrunde, eine Vorrichtung zum Erzeugen oder Wandeln eines Drehmoments zur Verfügung zu stellen, die bei einfacher Bauart und einer geringen Anzahl von Bauteilen eine Krafterzeugung oder Kraftwandlung ermöglicht.

Diese Aufgabe wird durch einen Gegenstand mit den Merkmalen des Anspruchs 1 gelöst.

Eine derartige Vorrichtung weist ein Antriebselement und ein relativ zum Antriebselement drehbares Abtriebselement auf, das ausgebildet ist, eine lineare Bewegung relativ zum Antriebselement auszuführen. Dabei ist vorgesehen, dass das Antriebselement über einen Eingriff in eine Nut zum gleichzeitigen Ausführen einer Drehbewegung und einer linearen Bewegung mit dem Antriebselement zwangsgekoppelt ist.

Diesem liegt der Gedanke zugrunde, bei einer Vorrichtung zum Erzeugen oder Wandeln eines Drehmomentes eine Zwangskopplung zwischen einem Antriebselement und einem Abtriebselement derart herzustellen, dass das Abtriebselement in zwangsgekoppelter Weise eine lineare Bewegung und eine Drehbewegung relativ zum Antriebselement ausführt. Ist das Antriebselement feststehend ausgebildet und das Abtriebselement um eine Drehachse drehbar angeordnet, bewirkt die Zwangskopplung, dass das Abtriebselement, wenn es in geeigneter Weise angetrieben wird, gleichzeitig eine Drehbewegung um die Drehachse und eine lineare Bewegung axial entlang der Drehachse ausführt.

Eine derartige Vorrichtung kann beispielsweise als Antriebsvorrichtung in Form eines Verbrennungsmotors Verwendung finden. Dazu begrenzen das Antriebselement und das Abtriebselement einen Raum, dessen Volumen sich bei einer linearen Bewegung in Form einer periodischen Hubbewegung des Abtriebelementes relativ zum Antriebselement periodisch verändert. Ist ein als Brennstoff dienendes Fluid in diesem Raum angeordnet, so wird dieses in Folge der linearen Hubbewegung verdichtet und kann in verdichtetem Zustand gezündet werden. Durch die Zündung dehnt sich das Fluid aus und treibt das Abtriebselement an, so dass das Abtriebselement sich in zwangsgekoppelter Weise linear und gleichzeitig rotatorisch bewegt. Auf diese Weise wird ein Drehmoment erzeugt, dass auf eine Abtriebswelle beispielsweise zum Antreiben eines Fahrzeugs übertragen werden kann.

Zum Steuern der Fluidzufuhr in den als Brennraum dienenden, durch das Antriebselement und das Abtriebselement begrenzten Raum können an dem Antriebselement ein Einlassventil und ein Auslassventil zum Einlassen und Auslassen des Fluids angeordnet sein. Darüber hinaus ist an dem Antriebselement vorteilhafterweise eine Zündkerze zum Zünden des Fluids angeordnet.

Die Nut zur Bereitstellung der Zwangskopplung kann in einer Ausführungsform beispielsweise an dem Abtriebselement angeordnet sein, sich sinusförmig um das zylindrisch ausgebildete Abtriebselement erstrecken und in eine dem Antriebselement zugewandte Seite des Abtriebselementes eingeformt sein. Die Nut läuft an einer Zylinderwand des Abtriebselementes um und koppelt das Antriebselement derart mit dem Abtriebselement, dass das Abtriebselement in zwangsgekoppelter Weise eine Drehbewegung und eine lineare Bewegung in Form einer periodischen Hubbewegung ausführt, wenn es in Bewegung versetzt wird. Bei einer Drehbewegung des Abtriebselementes relativ zum Antriebselement bewegt sich das Abtriebselement entlang der Nut relativ zum Antriebselement, wobei durch den Eingriff in die Nut das Abtriebselement gleichzeitig linear zum Antriebselement verstellt wird. Umgekehrt verhält es sich genauso. Bei einer linearen Bewegung des Abtriebselementes bewegt sich das Abtriebselement entlang der Nut relativ zum Antriebselement und wird gleichzeitig in zwangsgekoppelter Weise auch in eine Drehbewegung versetzt.

In einer kinematisch umgekehrten Ausführung kann die Nut auch an einem das Abtriebselement umgreifenden, zylindrischen Abschnitt des Antriebselementes angeordnet sein und sich sinusförmig entlang des Abschnitts erstrecken, so dass die Nut an einer dem Abtriebselement zugewandten Seite des Abschnitts des Antriebselementes umläuft. Dies hat den Vorteil, dass die Nut außerhalb des begrenzten Raums angeordnet werden kann und so die Abdichtung des Raums erleichtert ist.

Zur Kopplung mit einer Abtriebswelle kann das Abtriebselement beispielsweise einen sich axial erstreckenden Schaft aufweisen, an dem die Abtriebswelle axial verschieblich und in Umfangsrichtung formschlüssig angeordnet ist. Der Schaft kann beispielsweise als zylindrische Hülse ausgebildet sein, in die die Abtriebswelle eingreift. Hierzu kann der Schaft eine Innenverzahnung aufweisen, die mit einer entsprechenden Außenverzahnung der Abtriebswelle derart in Eingriff steht, dass die Abtriebswelle relativ zum Schaft axial verschieblich, jedoch in Umfangsrichtung formschlüssig festgelegt ist. Durch eine derartige Kopplung des Abtriebselementes mit der Abtriebswelle wird erreicht, dass die Drehbewegung, nicht aber die lineare Bewegung des Abtriebselementes auf die Abtriebswelle übertragen wird, so dass sich die Abtriebswelle zusammen mit dem Abtriebselement dreht, sich aber nicht linear bewegt.

Der Formschluss zwischen dem Schaft und der Abtriebswelle kann anstelle einer Verzahnung auch beispielsweise über eine mehrkantige (beispielsweise vierkantige), elliptische oder auf andere Weise formschlüssige Ausbildung der Abtriebswelle bereitgestellt werden, die in eine entsprechende Bohrung des Schafts eingreift.

Alternativ ist auch denkbar, das zylindrisch ausgebildete Abtriebselement an seinem Zylindermantel mit einer Außenverzahnung zu versehen, die in eine entsprechende Verzahnung eines Zahnrades oder einer Welle eingreift. Auf diese Weise ist auch möglich, mehrere derartiger Vorrichtungen seriell nebeneinander anzuordnen, wobei die Vorrichtungen über die Außenverzahnungen der jeweiligen Abtriebselemente seriell in Eingriff stehen und somit zusammen ein insgesamt größeres Drehmoment erzeugen.

Das Abtriebselement ist als zylindrische Hohlwelle ausgebildet, in die das Antriebselement eingreift. Zur Schaffung einer Vorrichtung nach Art einer Zweizylinderanordnung wirkt das Abtriebselement mit zwei feststehenden Antriebselementen zusammen. Das Abtriebselement ist um eine Drehachse drehbar und gleichzeitig entlang der Drehachse verschieblich zu den Antriebselementen, wobei die Antriebselemente jeweils einen Raum innerhalb des Abtriebselement begrenzen, so dass durch die Bewegung des Abtriebselements relativ zu den Antriebselementen die Volumina der Räume verändert werden.

In weiterer Ausgestaltung dieser Variante kann das Abtriebselement in einem feststehenden zylindrischen Führungselement geführt sein, wobei an dem zylindrischen Führungselement ein Einlassventil zum Einlassen eines Fluids und ein Auslassventil zum Auslassen eines Fluids angeordnet sind, die durch Durchlassöffnungen ausgebildet sind, die bei einer Drehbewegung des Abtriebselementes relativ zum Führungselement mit Durchlassöffnungen an dem Abtriebselement in Wirkverbindung treten. Auf diese Weise kann auf separate Ventilanordnungen und -steuerungen verzichtet werden. Das Einlassventil und das Auslassventil werden durch die Durchlassöffnungen in dem Führungselement einerseits und dem als Hohlwelle ausgebildeten Abtriebselement andererseits verwirklicht, wobei ein Einlassen eines Fluids dann erfolgt, wenn die Durchlassöffnung des Abtriebselementes bei der Drehbewegung des Abtriebselementes in den Bereich der zum Einlassen vorgesehenen Durchlassöffnung am feststehenden Führungselement gelangt und damit den Durchlass freigibt. Das Auslassen eines Fluids erfolgt entsprechend, wenn die Durchlassöffnung des Abtriebselementes in den Bereich der zum Auslassen vorgesehenen Öffnung am Führungselement gelangt.

Eine derartige Vorrichtung kann auch als Kompressor (beispielsweise einer Klimaanlage) oder als Pumpenvorrichtung eingesetzt werden. Dazu wird das Abtriebselement beispielsweise durch einen externen Motor in eine Drehbewegung versetzt, wodurch das Abtriebselement aufgrund der Zwangskopplung mit dem Antriebselement gleichzeitig auch in eine lineare Hubbewegung versetzt wird und ein Fluid in dem durch das Abtriebselement und das Antriebselement begrenzten Raum zur Komprimierung oder Förderung verdichtet wird. In gleichem Sinne ist auch ein Einsatz der Vorrichtung zur Drehmomentwandlung bei einem hydraulischen Getriebe denkbar.

Der der Erfindung zugrunde liegende Gedanke soll nachfolgend anhand der in den Figuren dargestellten Ausführungsbeispiele näher erläutert werden. Die Figuren 1 bis 21 fallen nicht unter den Wortlaut des Anspruchs 1. Es zeigen:
- Fig. 1: eine schematische Ansicht einer Getriebevorrichtung;
- Fig. 2: eine perspektivische Ansicht eines Getriebegehäuses der Getriebevorrichtung;
- Fig.3: eine perspektivische Ansicht eines Übertragungselementes der Getriebevorrichtung;
- Fig.4: eine perspektivische Ansicht einer mit einem Antriebselement gekoppelten Antriebswelle der Getriebevorrichtung;
- Fig. 5: eine perspektivische Teilschnittansicht der Getriebevorrichtung ohne Antriebswelle;
- Fig. 6: eine perspektivische Teilschnittansicht der Getriebevorrichtung mit Antriebswelle;
- Fig. 7A-7D: schematische Ansichten der Getriebevorrichtung im Leerlauf bei sich drehender Antriebswelle und feststehender Abtriebswelle;
- Fig. 8A-8D: schematische Ansichten der Getriebevorrichtung bei starrer Kopplung;
- Fig. 9A-9F: schematische Ansichten der Getriebevorrichtung bei einem Übersetzungsverhältnis von 1:2;
- Fig. 10A: eine schematische Ansicht einer ersten Anordnung mit einer als Differentialausgleichsgetriebe eingesetzten Getriebevorrichtung;
- Fig. 10B: eine schematische Ansicht einer zweiten Anordnung mit einer als Differentialausgleichsgetriebe eingesetzten Getriebevorrichtung;
- Fig. 10C: eine schematische Ansicht einer dritten Anordnung mit einer als Differentialausgleichsgetriebe eingesetzten Getriebevorrichtung;
- Fig. 11: eine schematische Ansicht einer Baugruppe einer Getriebevorrichtung zum Übertragen großer Drehmomente;
- Fig. 12A, 12B: Ansichten einer als Verbrennungsmotor ausgebildeten Vorrichtung zum Erzeugen eines Drehmoments;
- Fig. 12C: Schnittansicht entlang der Linie I-I gemäß Fig. 12B;
- Fig. 13: eine Ansicht eines weiteren Ausführungsbeispiels einer als Verbrennungsmotor ausgebildeten Vorrichtung zum Erzeugen eines Drehmoments;
- Fig. 14: eine perspektivische Ansicht einer als Fahrradgetriebe ausgestalteten Getriebevorrichtung;
- Fig. 15: eine teilweise freigeschnittene perspektivische Ansicht der Getriebevorrichtung gemäß Fig. 14;
- Fig. 16A: eine Draufsicht auf die Getriebevorrichtung gemäß Fig. 14;
- Fig. 16B: eine Schnittansicht durch die Getriebevorrichtung entlang der Linie A-A gemäß Fig. 16A;
- Fig. 17A: eine im Vergleich zu Fig. 16A um 45° verdrehte Ansicht auf die Getriebevorrichtung gemäß Fig. 14;
- Fig. 17B: eine Schnittansicht durch die Getriebevorrichtung entlang der Linie B-B gemäß Fig. 17A;
- Fig. 18: eine perspektivische Ansicht des Übertragungselementes der Getriebevorrichtung gemäß Fig. 14;
- Fig. 19: eine Ansicht der Abtriebswelle der Getriebevorrichtung gemäß Fig. 14;
- Fig. 20: eine perspektivische Ansicht eines Bügels zur Einstellung der Vorspannung der Getriebevorrichtung gemäß Fig. 14;
- Fig. 21: eine perspektivische Ansicht eines Vorspannelements zur Einstellung der Vorspannung der Getriebevorrichtung gemäß Fig. 14;
- Fig. 22: eine Seitenansicht eines weiteren Ausführungsbeispiels einer als Verbrennungsmotor ausgebildeten Vorrichtung zum Erzeugen eines Drehmoments;
- Fig. 23: eine Schnittansicht durch die Vorrichtung gemäß Fig. 22;
- Fig. 24A-C: Ansichten eines Antriebselementes der Vorrichtung gemäß Fig. 22;
- Fig. 25: eine perspektivische Ansicht zweier zusammenwirkender Vorrichtungen zum Erzeugen eines Drehmoments;
- Fig. 26: eine Draufsicht auf die Anordnung gemäß Fig. 25;
- Fig. 27: eine Vorderansicht der Anordnung gemäß Fig. 25;
- Fig. 28: eine perspektivische Ansicht eines weiteren Ausführungsbeispiels einer als Verbrennungsmotor ausgebildeten Vorrichtung zum Erzeugen eines Drehmoments;
- Fig. 29A, B: Detailansichten eines Führungselementes der Vorrichtung gemäß Fig. 28;
- Fig. 30: eine Teilschnittansicht eines als Hohlwelle ausgebildeten Abtriebselementes der Vorrichtung gemäß Fig. 28;
- Fig. 31A-E: Seiten- und Schnittansichten der Vorrichtung und
- Fig. 32A-D: Seiten- und Schnittansichten zweier zusammenwirkender Vorrichtungen.

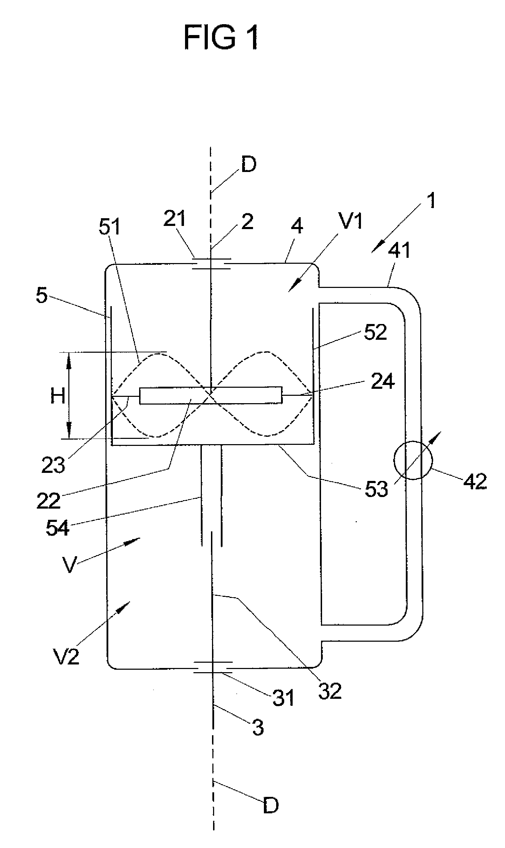

Fig. 1 zeigt in einer schematischen Ansicht eine Getriebevorrichtung 1 mit einer Antriebswelle 2, einem Übertragungselement 5 und einer Abtriebswelle 3. Das Übertragungselement 5 ist in einem Getriebegehäuse 4 angeordnet, das einen Raum V einschließt und an dem über Dicht- und Lagervorrichtungen 21, 31 die Antriebswelle 2 und die Abtriebswelle 3 um eine Drehachse D drehbar gelagert sind.

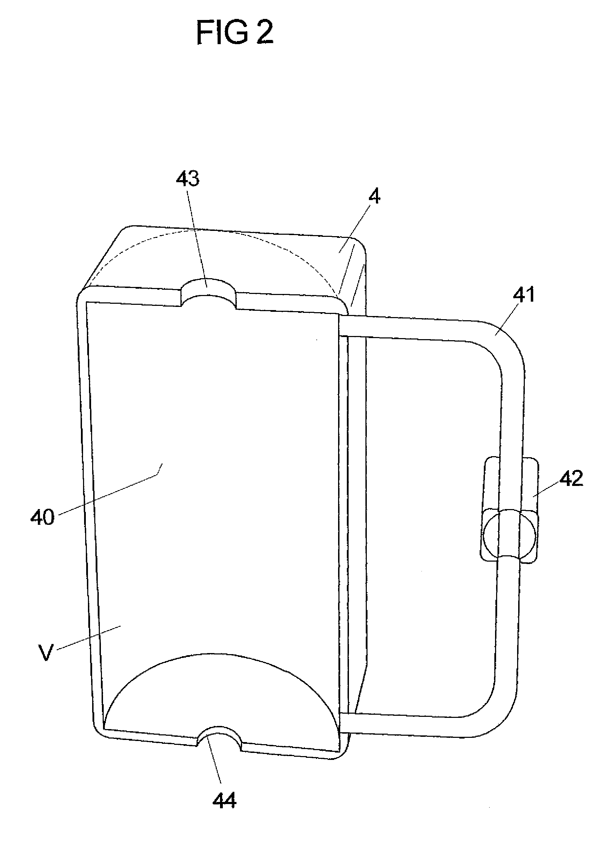

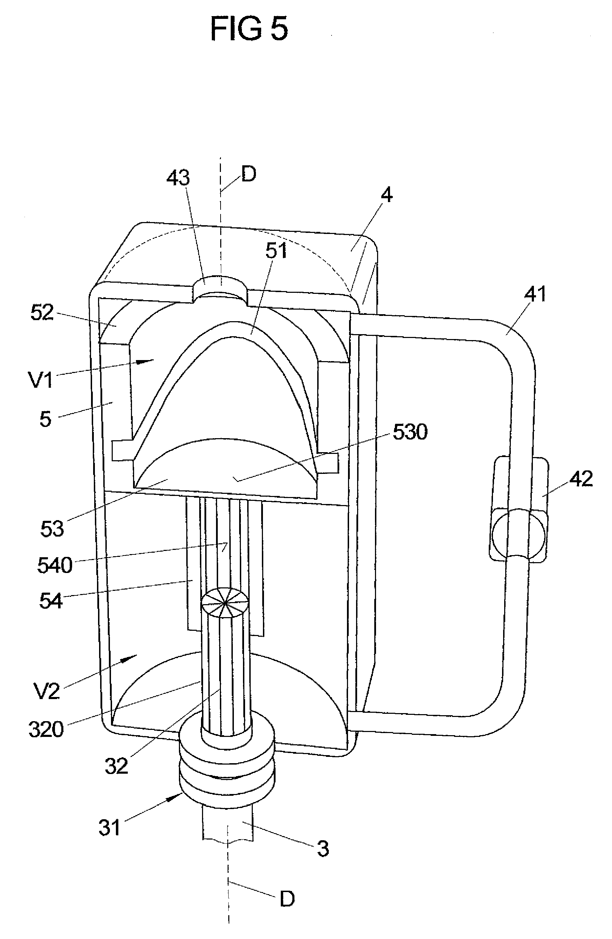

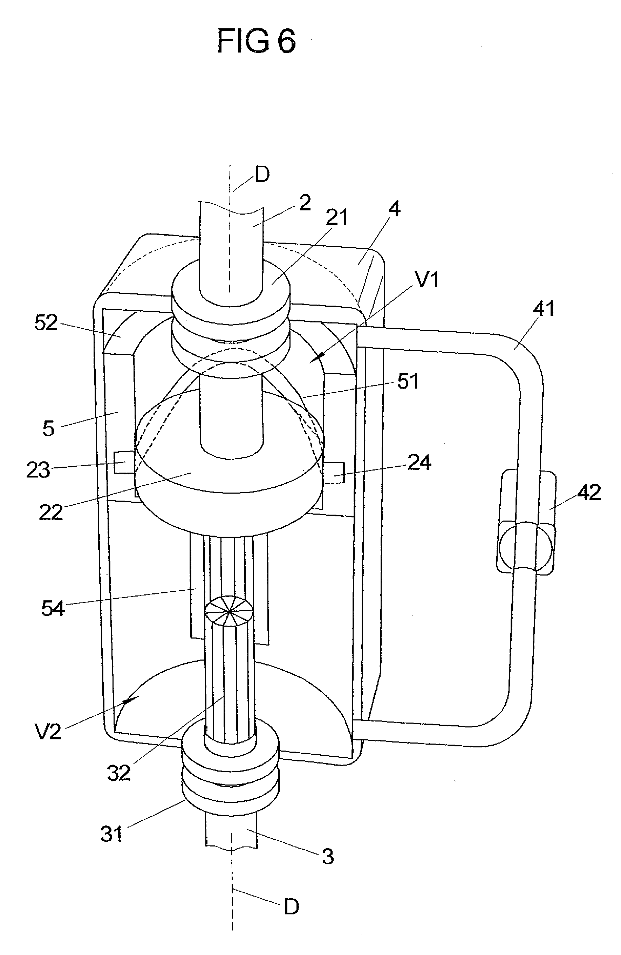

Gesonderte perspektivische Ansichten des Getriebegehäuses 4, des Antriebselements 5 und der Antriebswelle 2 sind in Fig. 2 bis 4 dargestellt. Fig. 5 zeigt zudem eine Teilschnittansicht des in dem Getriebegehäuse 4 angeordneten, mit der Abtriebswelle 3 gekoppelten Übertragungselementes 5. Die Ansicht gemäß Fig. 6 entspricht der Ansicht gemäß Fig. 5, wobei Fig. 6 die vollständige Getriebevorrichtung 1 mit der Antriebswelle 2 darstellt.

Der von dem Getriebegehäuse 4 eingeschlossene Raum V ist zylindrisch ausgebildet und nimmt das (zumindest abschnittsweise) ebenfalls zylindrisch ausgebildete Übertragungselement 5 auf. Das Übertragungselement 5 trennt den von dem Getriebegehäuse 4 eingeschlossenen Raum V in zwei Teilräume V1, V2, die über eine externe Verbindungsleitung 41 und ein Steuerventil 42 miteinander verbunden sind. Der Raum V und damit auch die Teilräume V1, V2 der Getriebevorrichtung 1 sind mit einem gasförmigen oder flüssigen, im Wesentlichen nicht komprimierbaren Fluid, beispielsweise mit einem Öl, gefüllt. Über die Verbindungsleitung 41 wird ein Fluidaustausch in Form eines Fluidstroms zwischen dem ersten Teilraum V1 und dem zweiten Teilraum V2 ermöglicht, der über das Steuerventil 42 eingestellt und geregelt werden kann.

Die Antriebswelle 2 und die Abtriebswelle 3 sind über die Dicht- und Lagervorrichtungen 21, 31 jeweils an einer Aussparung 43, 44 des Getriebegehäuses 4 gelagert, wobei über die Dicht- und Lagervorrichtungen 21, 31 das Getriebegehäuse derart abgedichtet ist, dass das in dem Raum V (bzw. den Teilräumen V1, V2) befindliche Fluid nicht aus dem Inneren des Getriebegehäuses 4 gelangen kann. Die über die Verbindungsleitung 41 verbundenen Teilräume V1, V2 stellen damit ein in sich geschlossenes System dar.

Das Übertragungselement 5 weist einen zylindrischen Grundkörper mit einer Zylinderwand 52 und einer Grundplatte 53 auf, die mit ihrer Außenseite 521 an der Innenwand 40 des Getriebegehäuses 4 anliegt. Der Übergang zwischen der Innenwand 40 des Getriebegehäuses 4 und der Zylinderwand ist weitestgehend dichtend ausgebildet, wobei übermäßig große Anforderungen an die Dichtigkeit nicht zu stellen sind. Vielmehr entscheidend ist eine leichte und reibungsarme Drehbarkeit des Übertragungselementes 5 in dem Getriebegehäuse 4.

Anstelle der Verbindungsleitung 41 oder zusätzlich kann ein Fluidaustausch auch dadurch ermöglicht werden, dass die Passung zwischen dem Getriebegehäuse 4 und dem Übertragungselement 5 nicht dichtend ausgeführt ist, sondern derart beschaffen ist, dass ein definierter Fluidstrom zwischen Getriebegehäuse 4 und Übertragungselement 5 fließen kann.

Die Verbindungsleitung 41 kann zudem auch durch Aussparungen in der Grundplatte 53 des Übertragungselementes 5 verwirklicht sein, so dass auf eine externe Verbindungsleitung 41 verzichtet werden kann.

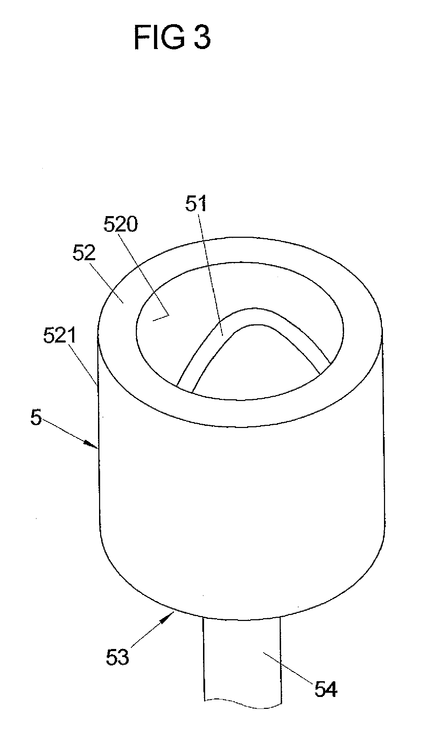

An der Innenwand 520 der Zylinderwand 52 ist, wie in Fig. 3 perspektivisch dargestellt und in Fig. 1 durch gestrichelte Linien angedeutet, eine Nut 51 eingeformt, in die die Antriebswelle 2 über ein scheibenförmig ausgebildetes Antriebselement 22 und an dem Antriebselement 22 angeordnete Bolzen 23, 24 eingreift. Die Nut 51 erstreckt sich sinusförmig entlang der Zylinderwand 52 und läuft an der Innenwand 520 um. Durch die Sinusform der Nut 51 wird eine kontinuierliche Bewegung des Übertragungselementes 5 bei einer Relativbewegung der Antriebswelle 2 gewährleistet, wobei grundsätzlich auch andere Formgebungen der Nut 51 möglich sind, die eine stetige lineare Bewegung des Übertragungselementes 5 bewirken.

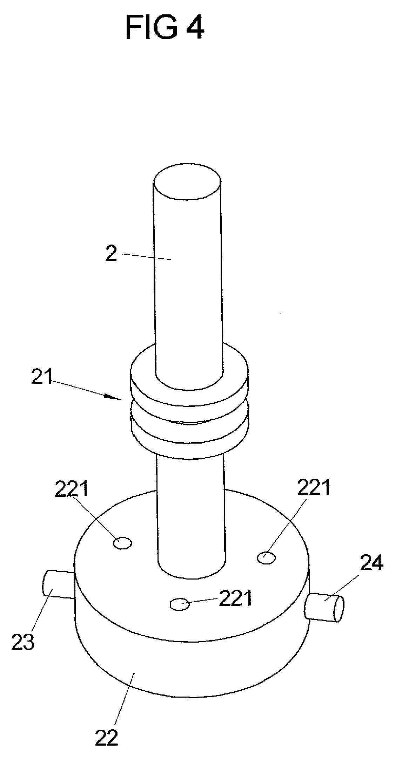

Die Nut kann aber auch eine geeignete andere Kurvenform aufweisen, die eine stetige Bewegung des Übertragungselementes 22 relativ zum Antriebselement 22 gewährleistet. Wie aus Fig. 4 ersichtlich, kann das Antriebselement 22 kreisrund ausgebildet sein. Um dabei einen freien Fluidfluss innerhalb des ersten Teilraums (siehe Fig. 1) zu ermöglichen, sind Aussparungen 221 in dem Antriebselement 22 vorgesehen. Ebenso denkbar ist, Aussparungen in Form von Einkerbungen im Randbereich des Antriebselementes 22 anzuordnen oder ein nicht kreisförmiges, beispielsweise stangenförmiges Antriebselement 22 zu verwenden.

An die die Zylinderwand 52 nach unten abschließende Grundplatte 53 schließt ein Schaft 54 des Übertragungselementes 5 an, über den, wie in Fig. 5 dargestellt, die Abtriebswelle 3 mit dem Übertragungselement 5 gekoppelt ist. Der Schaft 54 ist hierzu in Form einer zylindrischen, fest mit der Grundplatte 53 verbundenen Hülse ausgebildet, die in einer inneren zentralen Bohrung eine Innenverzahnung 540 aufweist, die formschlüssig mit einer Außenverzahnung 320 eines Kopplungsabschnitts 32 der Abtriebswelle 3 in Eingriff steht. Die Abtriebswelle 3 ist so über den Kopplungsabschnitt 32 in Umfangsrichtung um die Drehachse D formschlüssig mit dem Schaft 54 verbunden, jedoch axial zur Drehachse D zum Schaft 54 verschieblich.

Die Kopplung des Übertragungselementes 5 mit der Abtriebswelle 3 muss nicht zwangsläufig über eine Verzahnung 320, 540 erfolgen, sondern kann auch auf andere formschlüssige Weise hergestellt werden, beispielsweise über Ausbildung des Kopplungsabschnitts 32 im Querschnitt nach Art eines Mehrkants oder einer Ellipse.

Der Hohlraum innerhalb des Schafts 54 (siehe Fig. 5 und 6) kann Teil des ersten Teilraums V1 oder Teil des zweiten Teilraums V2 sein. Im ersten Fall sind in der Grundplatte 53 des Übertragungselements 5 in einem zentralen Bereich 530 oberhalb des Schafts 54 Öffnungen vorzusehen, die eine einen Fluidaustausch ermöglichende Verbindung des ersten Teilraums V1 mit dem Hohlraum des Schafts 54 herstellen. Im zweiten Fall sind im Schaft 54 Aussparungen vorzusehen, die einen Fluidaustausch des Hohlraums mit der Umgebung des zweiten Teilraums V2 ermöglichen.

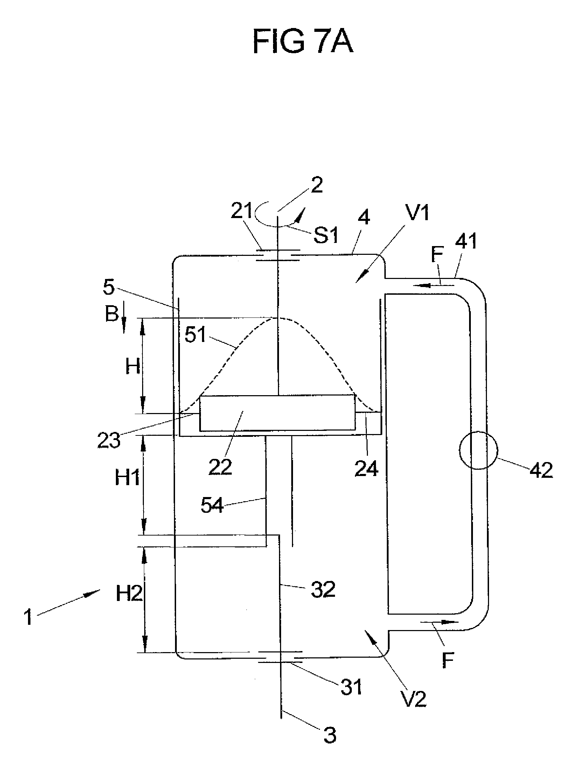

Bei der in Fig. 1-6 dargestellten Getriebevorrichtung 1 wird die Übertragung einer Drehbewegung von der Antriebswelle 2 auf die Abtriebswelle 3 hydrostatisch über das Steuerventil 42 geregelt. Über das Übertragungselement 5 sind die Antriebswelle 2 und die Abtriebswelle 3 dabei derart miteinander gekoppelt, dass ein Unterschied in der Drehgeschwindigkeit der Antriebswelle 2 und der Drehgeschwindigkeit der Abtriebswelle 3 eine lineare Bewegung des Übertragungselements 5 in dem Getriebegehäuse 4 bewirkt. Der Drehzahlunterschied zwischen der Antriebswelle 2 und der Abtriebswelle 3 kann dabei über das Steuerventil 42 eingestellt werden. So kann bei geöffnetem Steuerventil 42, wie nachfolgend anhand von Fig. 7A bis 7D beschrieben werden soll, ein Fluidstrom zwischen den Teilräumen V1, V2 fließen, so dass sich das Übertragungselement 5 linear in dem Getriebegehäuse 4 bewegen kann und eine Drehbewegung der Antriebswelle 2 in eine lineare Bewegung des Übertragungselements 5 umgesetzt wird, dabei die Abtriebswelle 3 jedoch feststeht (bzw. leer läuft). Umgekehrt werden bei vollständig geschlossenem Steuerventil 42 die Antriebswelle 2 und die Abtriebwelle 3 über das Übertragungselement 5 starr miteinander gekoppelt, so dass eine Drehbewegung der Antriebswelle 2 in eine identische Drehbewegung der Abtriebswelle 3 umgesetzt wird. Über Zwischenstellungen des Steuerventils 42 kann das Übersetzungsverhältnis der Getriebevorrichtung 1 eingestellt werden, so dass in solchen Zwischenstellungen des Steuerventils 42 eine Drehbewegung der Antriebswelle 2 in eine verlangsamte Drehbewegung der Abtriebswelle 3 umgesetzt wird.

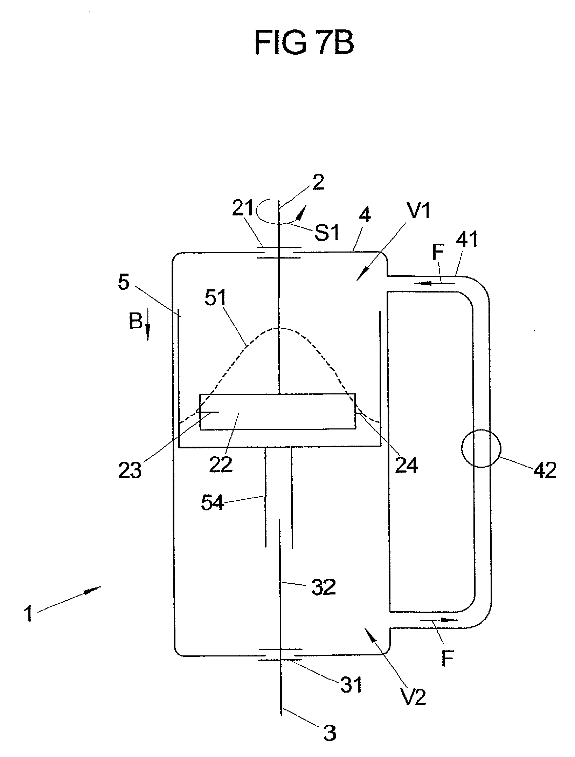

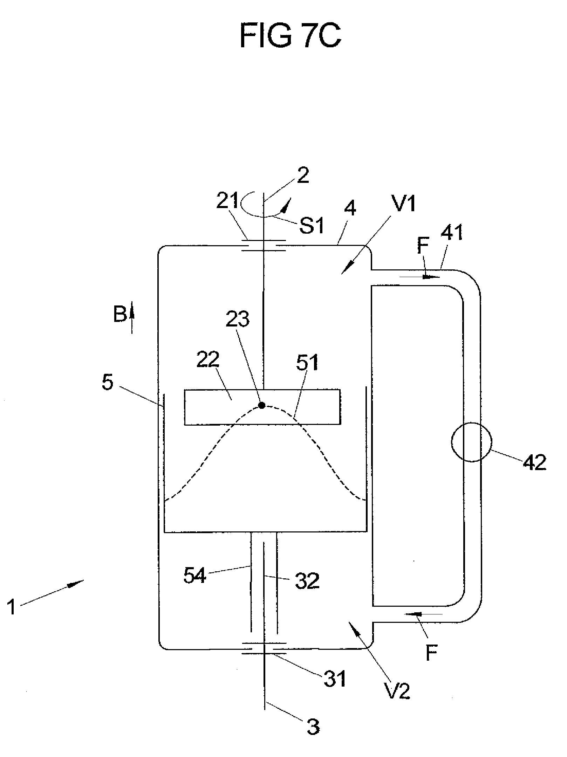

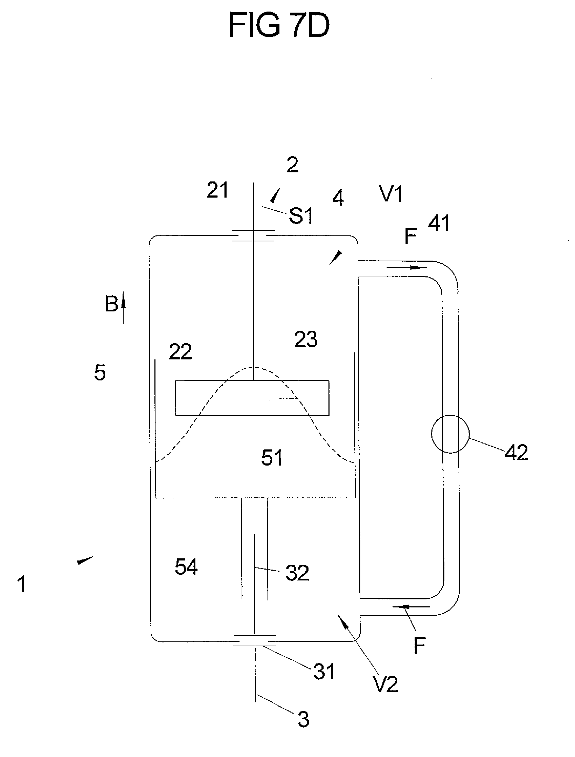

Die Funktionsweise der Getriebevorrichtung 1 in Abhängigkeit von der Stellung des Steuerventils 42 soll nun anhand der schematischen Ansichten von Fig. 7 bis 9 erläutert werden.

Fig. 7A bis 7D zeigen die Getriebevorrichtung 1 bei maximal geöffnetem Steuerventil 42, bei der ein Fluidstrom F ungehindert durch die Verbindungsleitung 41 zwischen den Teilräumen V1, V2 des Getriebegehäuses 4 fließen kann. Dies führt dazu, dass das Übertragungselement 5 eine Bewegung B innerhalb des Getriebegehäuses 4 ausführen kann und sich somit innerhalb des Getriebegehäuses 4 heben und senken kann. Wird die Antriebswelle 2 mit einer Drehgeschwindigkeit S1 gedreht, bewegt sich das Antriebselement 22 mit den Bolzen 23, 24 entlang der sinusförmig ausgebildeten Nut 51 an dem Übertragungselement 5 und bewirkt, dass sich das Übertragungselement 5 in dem Getriebegehäuse 4 verstellt, dadurch sich die Volumen der Teilräume V1, V2 ändern und ein Fluidstrom F zwischen den Teilräumen V1, V2 fließt.

Fig. 7A zeigt zunächst die Getriebevorrichtung 1 mit dem Übertragungselement 5 in einer oberen Position. Wird die Antriebswelle 2 um die Drehachse D verdreht, gleiten die Bolzen 23, 24 in der Nut 51 und verstellen das Übertragungselement, wie in Fig. 7B und 7C dargestellt, in eine untere Position, in der die Bolzen 23, 24 in gegenüber liegende Scheitelpunkte der Nut 51 eingreifen. Wird die Antriebswelle 2 weiter verdreht, laufen die Bolzen 23, 24, wie in Fig. 7D dargestellt, weiter in der Nut 51 und heben das Übertragungselement 5 dadurch wieder an, bis es wieder in die obere Position gemäß Fig. 7A gelangt und der Vorgang erneut beginnt. Auf diese Weise wird die Drehbewegung der Antriebswelle 2 vollständig in eine lineare Bewegung des Übertragungselements 5 umgesetzt, wobei das Übertragungselement 5 nicht verdreht und keine Drehbewegung auf die Abtriebswelle 3 übertragen wird, sondern sich das Übertragungselement 5 lediglich in axialer Richtung entlang des Kopplungsabschnitts 32 der Abtriebswelle 3 verschiebt. Die Getriebevorrichtung 1 befindet sich somit in einem Leerlauf, in dem kein Drehmoment auf die Abtriebswelle 3 übertragen wird, ohne dass hierzu eine Entkopplung unter Verwendung einer gesonderten Kopplungsvorrichtung erforderlich ist.

Der Hub des Übertragungselementes 5 (entsprechend der Höhendifferenz zwischen der oberen Position und der unteren Position) entspricht dabei der Höhe H der Nut 51.

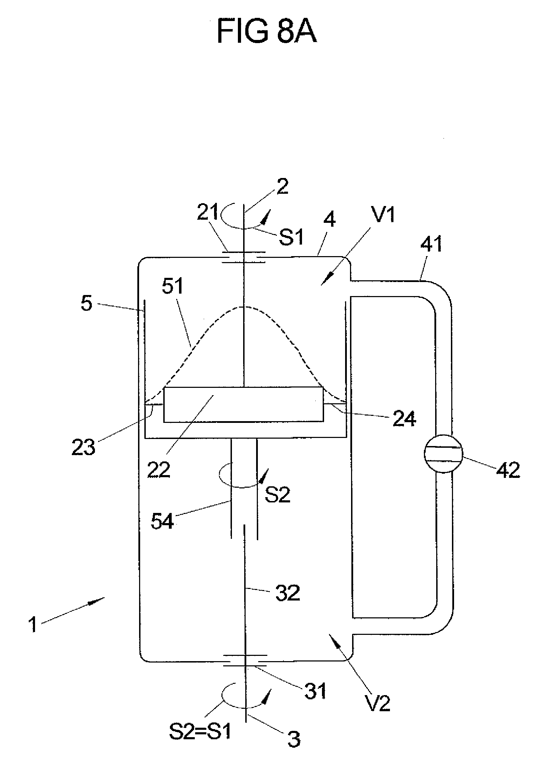

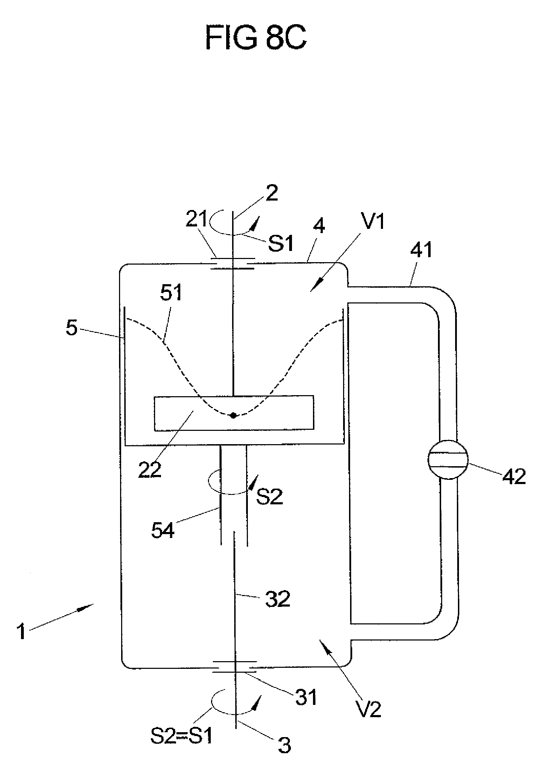

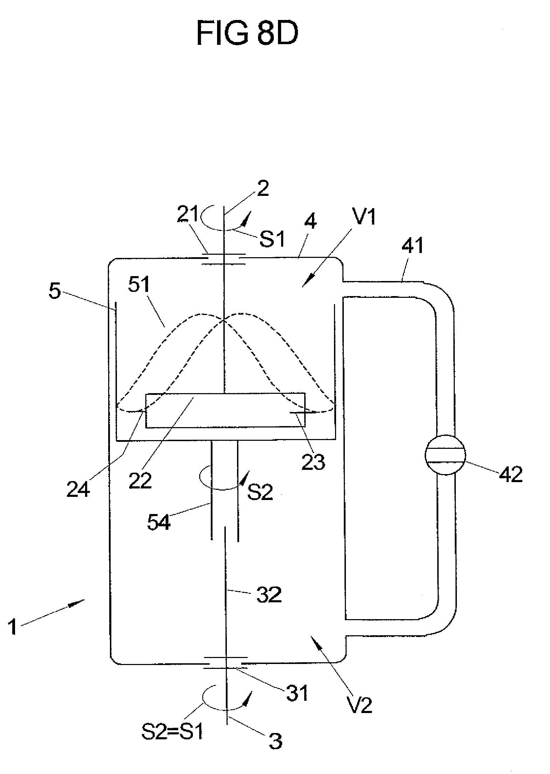

In Fig. 8A bis 8D ist die Funktionsweise der Getriebevorrichtung 1 bei geschlossenem Steuerventil 42 dargestellt. Dadurch, dass das Steuerventil 42 geschlossen ist, ist ein Fluidstrom über die Verbindungsleitung 41 und somit ein Fluidaustausch zwischen den Teilräumen V1, V2 des Getriebegehäuses 4 unterbunden. Dadurch wird verhindert, dass sich im Betrieb der Getriebevorrichtung 1 die Volumen der Teilräume V1, V2 ändern können (dies setzt voraus, dass das beispielsweise aus Öl bestehende Fluid nicht komprimierbar ist) und das Übertragungselement 5 sich nicht linear in dem Getriebegehäuse 4 verstellen kann. Weil die Antriebswelle 2 damit nicht entlang der Nut 51 umlaufen kann, sind die Antriebswelle 2 und das Übertragungselement 5 und über das Übertragungselement 5 die Abtriebswelle 3 starr miteinander gekoppelt, so dass eine Drehbewegung der Antriebswelle 2 in eine identische Drehbewegung der Abtriebswelle 3 übertragen wird.

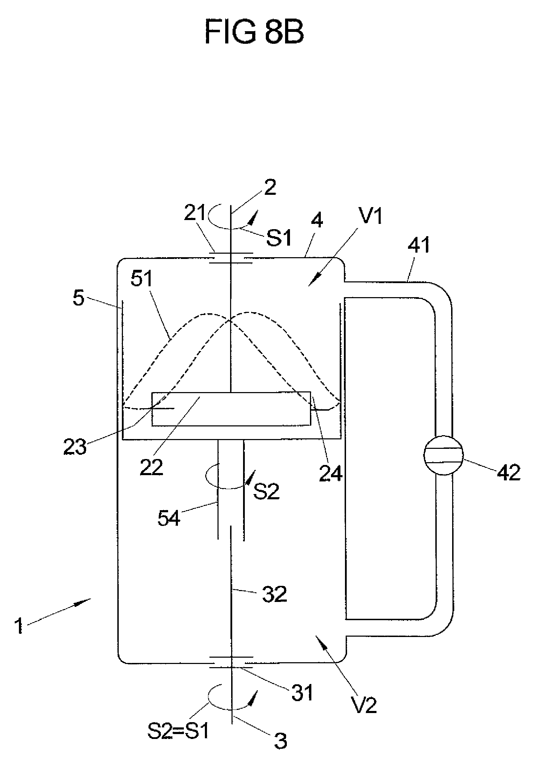

In Fig. 8A befindet sich das Übertragungselement 5 zunächst in einer ersten Verdrehstellung. Dadurch, dass das Übertragungselement 5 sich nicht innerhalb des Getriebegehäuses 4 linear verstellen kann, kann das Antriebselement 22 mit den Bolzen 23, 24 nicht in der Nut 51 des Übertragungselements 5 umlaufen und ist somit relativ zum Übertragungselement 5 festgelegt. Eine Drehbewegung mit einer Drehgeschwindigkeit S1 der Antriebswelle 2 wird damit in eine Drehbewegung des Übertragungselements 5 mit einer Drehgeschwindigkeit S2 und durch die formschlüssige Kopplung des Übertragungselements 5 mit der Abtriebswelle 3 in eine Drehbewegung der Abtriebswelle 3 mit einer Drehgeschwindigkeit S2=S1 umgesetzt. Fig. 8B bis 8D zeigen das Übertragungselement 5 in unterschiedlichen Verdrehpositionen, wobei eine lineare Verstellung des Übertragungselements 5 innerhalb des Getriebegehäuses 4 nicht erfolgt.

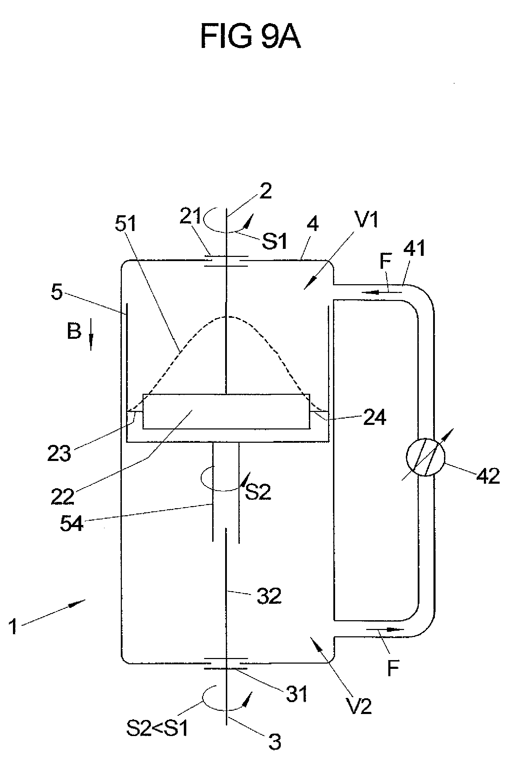

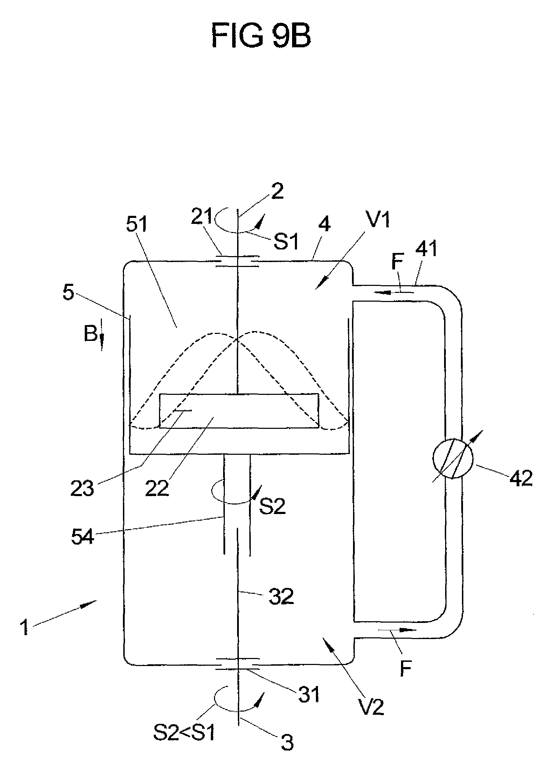

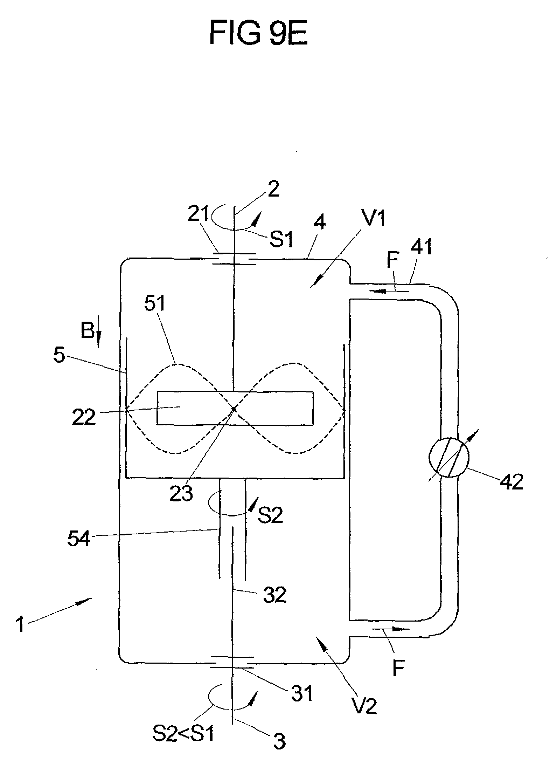

Fig. 9A bis 9F zeigen schließlich die Betriebsweise der Getriebevorrichtung 1 mit dem Steuerventil 42 in einer Zwischenstellung. Der Fluidstrom F zwischen dem ersten Teilraum V1, V2 ist dadurch begrenzt, so dass ein Fluidaustausch zwischen dem ersten Teilraum V1 und dem zweiten Teilraum V2 nicht ungehindert erfolgen kann. Eine Drehbewegung der Antriebswelle 2 wird so in reduzierter Weise in eine Drehbewegung der Abtriebswelle 3 umgesetzt.

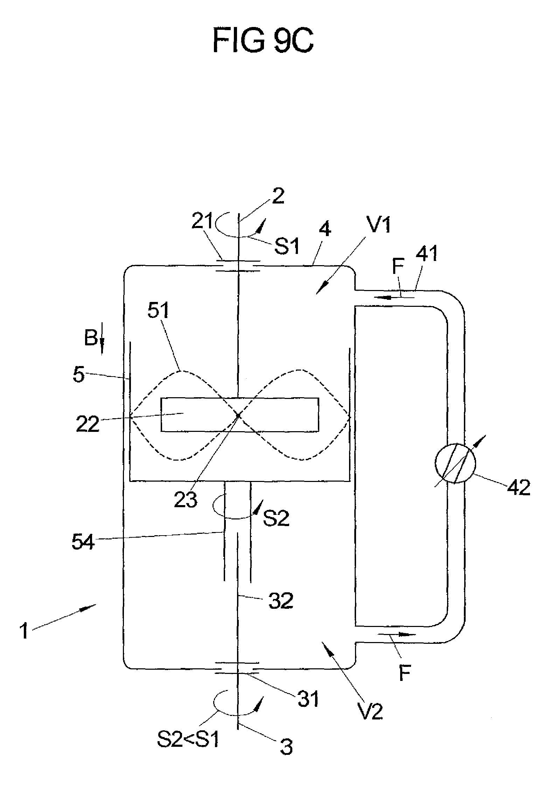

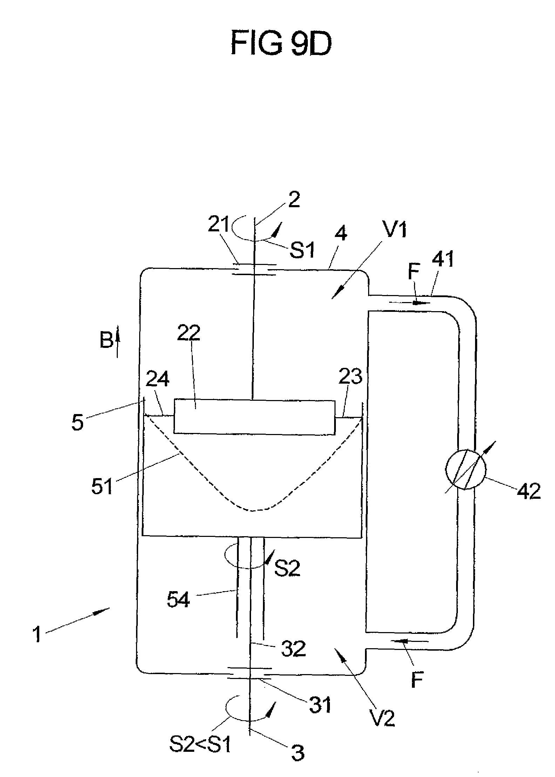

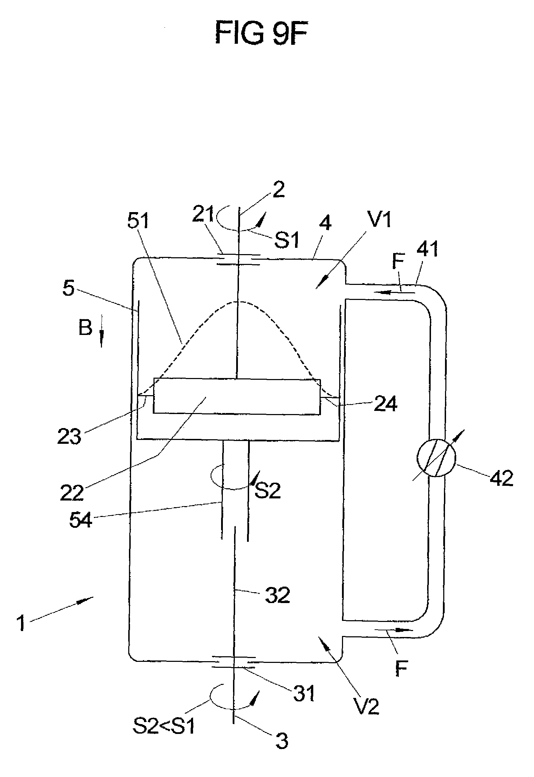

Fig. 9A zeigt das Übertragungselement 5 in einer oberen Position und in einer ersten Verdrehstellung. Wird die Antriebswelle 2 verdreht, so läuft das Antriebselement 22 mit den Bolzen 23, 24 in der Nut 51 um, so dass das Übertragungselement 5 eine lineare Bewegung B in dem Getriebegehäuse 4 ausführt und abgesenkt wird. Gleichzeitig wird das Übertragungselement 5 verdreht, wobei die Drehgeschwindigkeit S2 des Übertragungselements 5 kleiner als die Drehgeschwindigkeit S1 der Antriebswelle 2 ist. Über die formschlüssige Kopplung des Schafts 54 wird gleichzeitig auch die Abtriebswelle 3 mit einer Drehgeschwindigkeit S2<S1 bewegt. Fig. 9C bis 9F zeigen das Übertragungselement 5 in unterschiedlichen Stellungen, wobei in Fig. 9D das Übertragungselement 5 in einer unteren Position dargestellt ist, in der das Übertragungselement relativ zur Stellung gemäß Fig. 9A um 90° verdreht ist. In Fig. 9F ist das Übertragungselement 5 schließlich wieder in der oberen Position, wobei das Antriebselement 22 eine volle Umdrehung, das Übertragungselement 5 (und dementsprechend die Abtriebswelle 3) jedoch lediglich eine halbe Umdrehung ausgeführt hat. Die Drehgeschwindigkeit S1 der Antriebswelle 2 wird damit in die halbe Drehgeschwindigkeit S2 der Abtriebswelle 3 umgesetzt.

Wie in Fig. 7A angedeutet, ist die Nut 51 des Übertragungselementes 5 sinusförmig ausgebildet und definiert einen Hub der Höhe H des Übertragungselementes 5 in dem Getriebegehäuse 4. Das Übertragungselement 5 bewegt sich somit mit einer Amplitude der Höhe H in dem Getriebegehäuse 4. Daraus folgt, dass der Abstand H1 zwischen dem oberen Ende der Abtriebswelle 3 und der Grundplatte 53 in der oberen Position des Übertragungselementes 5 (Fig. 7A) größer ist als der maximale Hub (Höhe H) der Nut 51, damit die Abtriebswelle 3 beim Absenken des Übertragungselements 5 nicht an die Grundplatte 53 anschlägt. Ebenso ist der Abstand H2 zwischen dem unteren Ende des Schaftes 54 und der Dicht- und Lagervorrichtung 31 der Abtriebswelle 3 in der oberen Position des Übertragungselementes 5 (Fig. 7A) größer als der Hub (Höhe H), damit der Schaft 54 nicht an das Getriebegehäuse 4 anschlägt.

Die vorangehend geschilderte Getriebevorrichtung 1 kann vorteilhafterweise zur Übertragung eines Drehmoments von einem Antriebsmotor auf einen Abtrieb eingesetzt werden. In diesem Zusammenhang kann die Getriebevorrichtung 1 beispielsweise bei einem Fahrzeug, insbesondere einem Kraftfahrzeug, einem Schiff oder einer Lokomotive als stufenlos regelbares Getriebe für einen Antrieb Verwendung finden, wobei durch Steuerung und Regelung des Steuerventils 42 das Übersetzungsverhältnis stufenlos eingestellt werden und die Steuerung in elektronischer Weise automatisch erfolgen kann.

Die Kennlinie der Übersetzung kann dabei nach unterschiedlichen Kriterien eingestellt werden, nämlich beispielsweise zum Erzielen eines besonders günstigen Verbrauchs, zum Einstellen einer optimalen Fahrdynamik, zur Geräuschminimierung oder zur Reduzierung des Abgasausstoßes.

Eine Getriebevorrichtung der beschriebenen Art kann darüber hinaus unter anderem auch bei Werkzeugmaschinen, beispielsweise Schraubern oder Bohrmaschinen Verwendung finden.

Denkbar ist auch, die Getriebevorrichtung 1 als Automatikgetriebe bei einem Fahrrad einzusetzen, indem die Antriebswelle 2 über Antriebspedale angetrieben und das Steuerventil 42 auf einen gewünschten Widerstand derart eingestellt wird, dass abhängig von dem über die Antriebspedale erzeugten Drehmoment die beispielsweise mit einem Hinterrad verbundene Abtriebswelle 3 angetrieben wird.

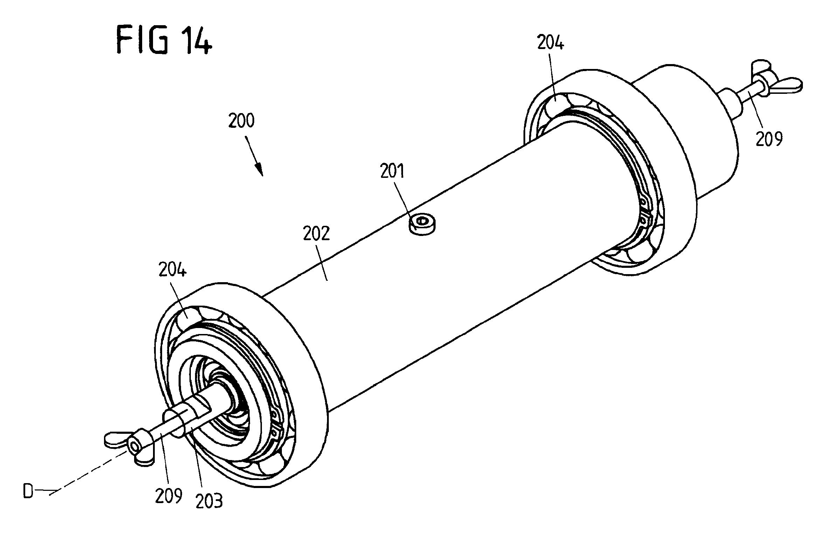

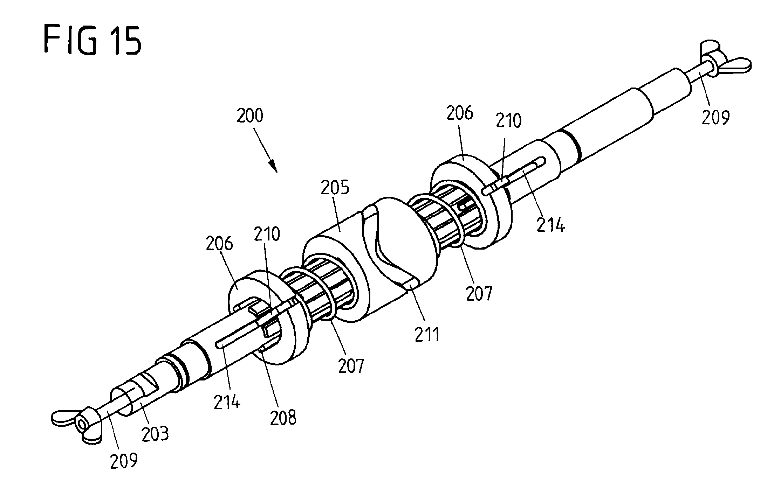

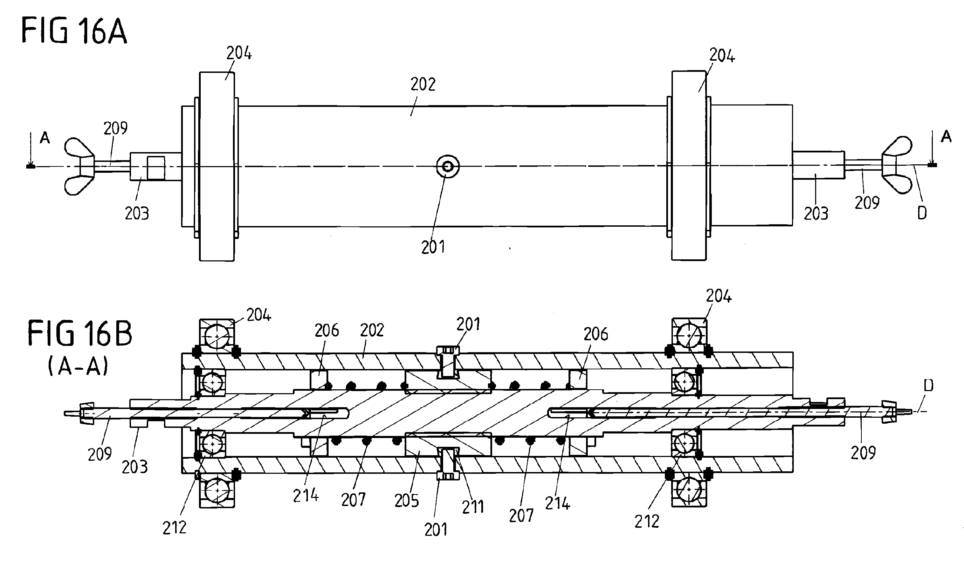

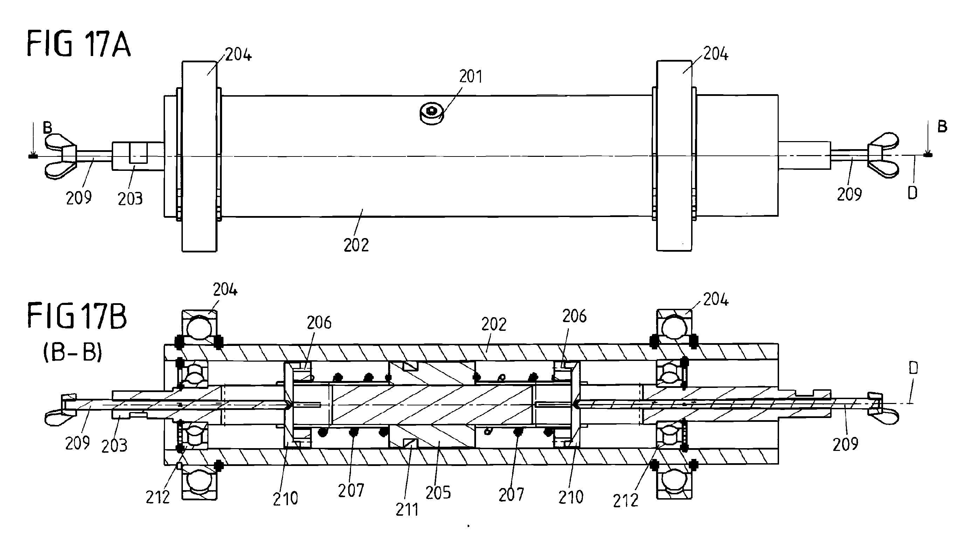

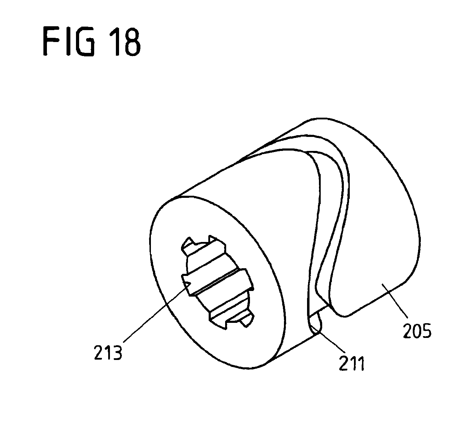

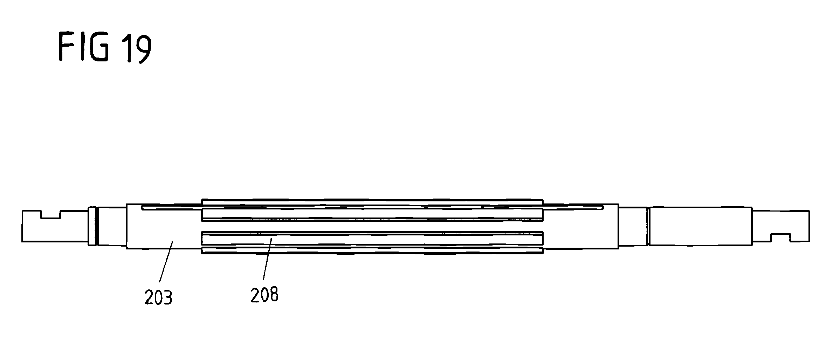

Eine Ausgestaltung einer Getriebevorrichtung 200 als Fahrradgetriebe ist in unterschiedlichen Ansichten in Fig. 14 bis 21 dargestellt. Fig. 14 zeigt hier zunächst eine perspektivische Ansicht der Getriebevorrichtung 200, Fig. 15 zeigt eine teilweise freigeschnittene Ansicht, Fig. 16A, 16B und 17A, 17B zeigen unterschiedliche Schnittansichten und Fig. 18 bis 21 zeigen einzelne Bauteile der Getriebevorrichtung 200 im Detail.

Bei der Getriebevorrichtung 200 gemäß Fig. 14 bis 21 ist eine Abtriebswelle 202 vorgesehen, die als zylindrische Hohlwelle ausgebildet ist und über als Kugellager ausgebildete Lager 204 am Rahmen eines Fahrrads gelagert ist. An der Abtriebswelle 202 kann beispielsweise ein Ritzel angeordnet sein, über das eine Kette zum Hinterrad verläuft und das Hinterrad antreibt.

Alternativ ist auch denkbar, die Getriebevorrichtung 200 in einer Hinterradnabe eines Fahrrads anzuordnen und über eine Fahrradkette anzutreiben.

Innerhalb der zylindrischen Abtriebswelle 202 ist eine Antriebswelle 203 angeordnet und über Lager 212 (siehe beispielsweise Fig. 16B) relativ zur Abtriebswelle 202 drehbar. Die Antriebswelle 203 dient als Tretlager, das beispielsweise mit Pedalen verbunden sein kann und von einem Fahrradfahrer angetrieben wird.

Innerhalb der Abtriebswelle 202 ist weiter, wie sich aus der teilweise freigeschnittenen Ansicht gemäß Fig. 15 ergibt, ein Übertragungselement 205 angeordnet, das im Wesentlichen zylindrisch ausgebildet ist und eine innere Bohrung 213 (siehe Fig. 18) aufweist, durch die sich die Antriebswelle 203 erstreckt. Die Antriebswelle 203 steht dabei derart mit dem Übertragungselement 205 in Eingriff, dass das Übertragungselement 205 axial in Richtung der Drehachse D relativ zur Antriebswelle 203 verschieblich ist, gleichzeitig aber in Umfangsrichtung um die Drehachse D formschlüssig über die innere Wandung der Bohrung 213 mit Stegen 208 der Antriebswelle 203 in Eingriff steht, so dass das Übertragungselement 205 sich in Umfangsrichtung nicht relativ zur Antriebswelle 203 verdrehen kann.

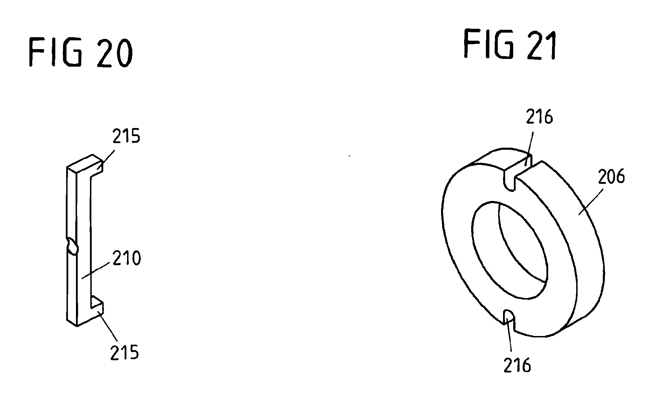

Das Übertragungselement 205 ist über zwei links und rechts des Übertragungselements 205 angeordnete Federn 207, die einerseits mit dem Übertragungselement 205 und andererseits mit Vorspannelementen 206 in Anlage sind, gegenüber der Antriebswelle 203 vorgespannt. Über die Vorspannelemente 206 kann die Vorspannung der Federn 207 eingestellt werden, indem die axiale Position der Vorspannelemente 206 über jeweils einen linksseitigen und einen rechtsseitigen Stift 209 und einen Bügel 210 (siehe Fig. 20) eingestellt werden kann. Die Stifte 209, beispielsweise ausgebildet als Verstellschrauben, greifen hierzu in jeweils eine endseitige Bohrung der Antriebswelle 203 ein und wirken auf die Bügel 210 ein, um die Vorspannelemente 206 in axialer Richtung zu verstellen.

Die Stifte 209 können beispielsweise über einen Bowdenzug betätigt werden, um die Vorspannung der Getriebevorrichtung 200 und damit das Übersetzungsverhältnis der Getriebevorrichtung 200 einzustellen.

Wie aus Fig. 15 ersichtlich, durchgreifen die Bügel 210 die Antriebswelle 203 an Langlöchern 214 (siehe hierzu auch die Schnittzeichnungen gemäß Fig. 16B und 17B).

Die Bügel 210 greifen mit Endabschnitten 215 in Aussparungen 216 der Vorspannelemente 206 ein (siehe die Detailansichten gemäß Fig. 20 und 21), so dass die Vorspannelemente 206 drehfest an der Antriebswelle 203 gehalten werden. Dadurch ist sichergestellt, dass die Federn 207 im Betrieb der Getriebevorrichtung 200 nicht auf Torsion belastet werden, da sich die Vorspannelemente 206 und das Übertragungselement 205 jeweils synchron mit der Antriebswelle 203 drehen und damit auch die Federn 207.

Die Abtriebswelle 202 steht über zwei Bolzen 201 (siehe Fig. 14 und die Schnittzeichnung gemäß Fig. 16B) mit einer Nut 211 des Übertragungselements 205 in Eingriff und ist über die Bolzen 201 mit dem Übertragungselement 205 zwangsgekoppelt. Die Zwangskopplung führt dazu, dass bei einer Drehung der Antriebswelle 203 das Übertragungselement 205 - abhängig von der eingestellten Vorspannung - in eine Drehbewegung und/oder axiale Bewegung relativ zur Abtriebswelle 202 versetzt wird.

In Betrieb der Getriebevorrichtung 200 wird die Antriebswelle 203 angetrieben und in eine Drehbewegung versetzt. Ist das Übertragungselement 205 so stark gegenüber der Antriebswelle 203 vorgespannt, dass sich das Übertragungselement 205 nicht linear bewegen kann, also keine axiale Bewegung relativ zur Antriebswelle 203 ausführen kann, so ist die Abtriebswelle 202 starr mit der Antriebswelle 203 gekoppelt. Dieser Zustand entspricht einer Übersetzung von 1:1, bei der sowohl die Drehgeschwindigkeit der Antriebswelle 203 als auch das Drehmoment vollständig auf die Abtriebswelle 202 übertragen werden.

Die Vorspannung wird hierbei eingestellt, indem die Vorspannelemente 206 dem Übertragungselement 205 axial angenähert und dadurch die Federn 207 auf Druck belastet werden.

Ist die Vorspannung der Federn 207 hingegen schwächer eingestellt, indem die Vorspannelemente 206 von dem Übertragungselement 205 entfernt sind (durch entsprechende Einstellung der Stifte 209), so kann das Übertragungselement 205 eine axiale Bewegung relativ zur Antriebswelle 203 ausführen. Die Drehbewegung der Antriebswelle 203 wird nicht mehr vollständig auf die Abtriebswelle 202 übertragen, sondern teilweise in eine lineare Bewegung des Übertragungselementes 205 umgesetzt. Die Abtriebswelle 202 ist damit relativ zur Antriebswelle 203 untersetzt: die Drehgeschwindigkeit der Abtriebswelle 202 ist gegenüber der Drehgeschwindigkeit der Antriebswelle 203 reduziert.

Ist die Vorspannung der Federn 207 so schwach eingestellt, dass sich das Übertragungselement 205 (nahezu) ungehindert axial relativ zur Antriebswelle 203 bewegen kann, befindet sich die Getriebevorrichtung 200 im Leerlauf, d. h., dass die Drehbewegung der Antriebswelle 203 vollständig in eine axiale Bewegung des Übertragungselements 205 umgesetzt wird, ohne dass die Abtriebswelle 202 in eine Drehbewegung versetzt wird.

Die Getriebevorrichtung 200 kann alternativ anstelle der Federn 207 oder auch zusätzlich zu den Federn 207 eine hydrodynamische Vorspannung durch Verwendung eines Fluids vorsehen. Hierzu kann das Übertragungselement 205 einen Raum innerhalb der Abtriebswelle 202 in zwei Teilräume teilen, so dass durch die lineare Bewegung des Übertragungselements 205 sich die Volumina der Teilräume ändern und das Übertragungselement 205 in Abhängigkeit von einem geregelten Fluidstrom von einem Teilraum zum anderen vorgespannt ist.

Vorteil der Verwendung der Federn 207 ist der einfache und kostengünstige Aufbau. Besondere Maßnahmen zur Abdichtung der Getriebevorrichtung 200 sind nicht erforderlich, was die Zuverlässigkeit der Getriebevorrichtung 200 im Betrieb erhöht.

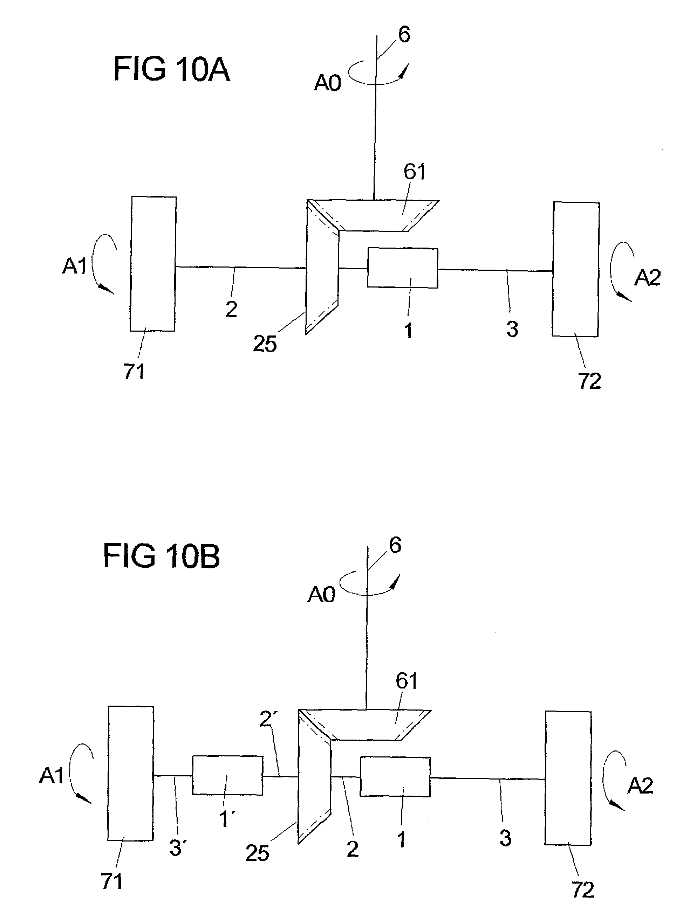

In einer weiteren Ausführungsform ist auch möglich, die Getriebevorrichtung 1 als Differentialausgleichsgetriebe einzusetzen, bei dem, wie in Fig. 10A dargestellt, eine mit einem Antriebsmotor verbundene Welle 6 über ein Kegelrad 61 mit einem an der Antriebswelle 2 angeordneten Kegelrad 25 zusammenwirkt. Über die Kegelräder 61, 25 wird die Antriebswelle 2 in eine Drehbewegung versetzt, wobei über die Getriebevorrichtung 1 ein Differentialausgleich ermöglicht wird, indem unterschiedliche Drehgeschwindigkeiten A1, A2 der Antriebswelle 2 und der Abtriebswelle 3 zugelassen werden. Die Welle 6 treibt so die Antriebswelle 2 direkt an, wobei die Drehgeschwindigkeit A2 der Abtriebswelle 3 unterschiedlich von der Drehgeschwindigkeit A1 der Antriebswelle 2 sein kann. Die Antriebswelle 2 und die Abtriebswelle 3 treiben jeweils ein Rad 71, 72 eines Fahrzeugs, beispielsweise eines Kraftfahrzeugs, eines Krads oder eines anderen drei-, vier- oder mehrrädrigen Fahrzeugs, an.

Bei Verwendung als Differentialausgleichsgetriebe ermöglicht die Getriebevorrichtung 1 die Bewegung der Antriebswelle 2 und der Abtriebswelle 3 mit unterschiedlichen Drehgeschwindigkeiten A1, A2. Durch Voreinstellung des Steuerventils 42 wird das Differentialausgleichsgetriebe vorzugsweise unter einer Vorspannung betrieben, wobei über das Steuerventil 42 ein maximal möglicher Drehzahlunterschied zwischen der Antriebswelle 2 und der Abtriebswelle 3 eingestellt werden kann, um die Getriebevorrichtung 1 beispielsweise auf einen Wendekreis eines Fahrzeuges abzustimmen. Das Steuerventil 42 kann hierzu beispielsweise derart eingestellt werden, dass der mögliche Drehzahlunterschied zwischen Antriebswelle 2 und Abtriebswelle 3 maximal 10% (oder auch weniger) beträgt.

Eine zusätzliche (mechanische) Differentialsperre kann bei einem solchen Differentialgetriebe entfallen, da die Getriebevorrichtung 1 bei geschlossenem Steuerventil 42 Antriebswelle 2 und Abtriebswelle 3 starr miteinander koppelt, die Drehgeschwindigkeit A1, A2 der Antriebswelle 2 und der Abtriebswelle 3 also gleich sind, so dass das Differentialausgleichsgetriebe gesperrt ist.

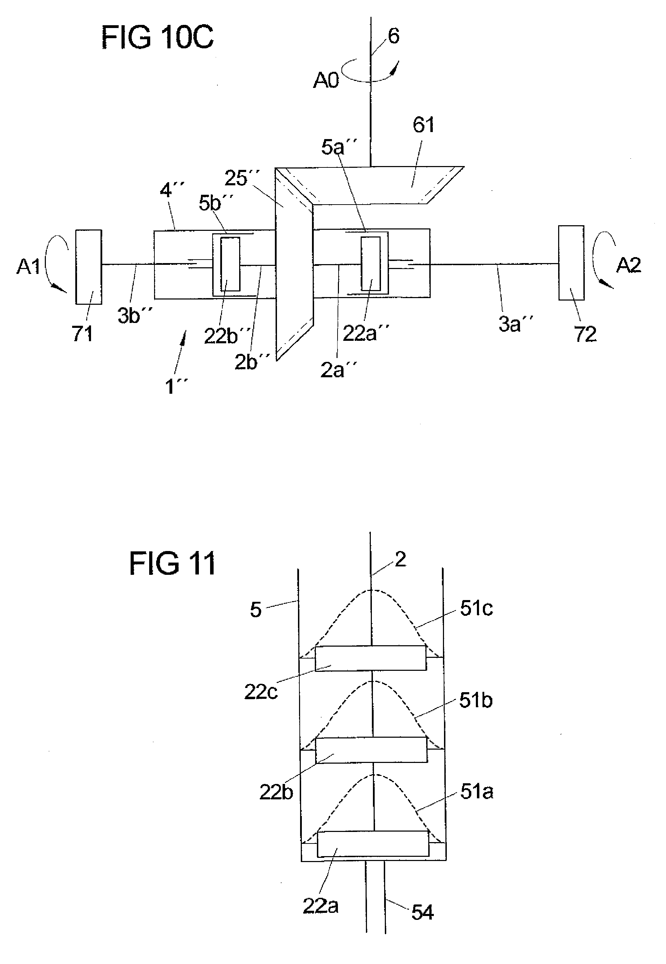

Andere Anordnungen zur Bereitstellung eines Differentialausgleichs sind in Fig. 10B und 10C dargestellt.

Bei der Anordnung gemäß Fig. 10B sind zwei Getriebevorrichtungen 1, 1' vorhanden, die Antriebswellen 2, 2' mit Abtriebswellen 3, 3' koppeln und einen beidseitigen Differentialausgleich der Räder 71, 72 zur Verfügung stellen. Die Antriebswellen 2, 2' sind jeweils mit dem Kegelrad 25 verbunden, das über das Kegelrad 61 angetrieben wird. Die Getriebevorrichtungen 1, 1' werden jeweils, durch geeignete Einstellung des Steuerventils 42 (siehe Fig. 1), unter Vorspannung betrieben, wobei eine Drehbewegung der Welle 6 über die Kegelräder 61, 25 und die Getriebevorrichtungen 1, 1' auf die Räder 71, 72 übertragen wird. Die Vorspannung der Getriebevorrichtungen 1, 1' muss hierfür hinreichend groß eingestellt sein (z. B. entsprechend einer Einstellung des Steuerventils 42 für einen maximal möglichen Drehzahlunterschied von 10%), damit ein Drehmoment in geeigneter Weise auf die Räder 71, 72 übertragen werden kann. Bei einer Kurvenfahrt gleichen die Getriebevorrichtungen 1, 1' dann unterschiedliche Drehgeschwindigkeiten A1, A2 der Räder 71, 72 aus.

Vorteil der Anordnung gemäß Fig. 10B ist der symmetrische Antrieb der Räder 71, 72.

Fig. 10C zeigt eine Getriebevorrichtung 1" zur Bereitstellung eines beidseitigen Differentialausgleichs, bei der in einem Gehäuse 4" zwei Übertragungselemente 5a", 5b" vorgesehen sind, die jeweils einerseits mit einer Antriebswelle 2a", 2b" und andererseits mit einer Abtriebswelle 3a", 3b" in Verbindung stehen. Die Antriebswellen 2a", 2b" werden über das Kegelrad 62 angetrieben, das hierzu zum einen drehfest mit den Antriebswellen 2a", 2b" und zum zweiten auch drehfest mit dem Gehäuse 4" verbunden ist, so dass im Betrieb sowohl die Antriebswellen 2a", 2b" als auch das Gehäuse 4" in eine Drehbewegung versetzt werden. Die Drehbewegung der Antriebswellen 2a", 2b" wird, wie vorangehend beschrieben, auf die Abtriebswellen 3a", 3b" übertragen, wobei die Getriebevorrichtung 1" unter Vorspannung betrieben wird.

Die Vorspannung wird durch geeignete Einstellung des Fluidstroms zwischen den Teilräumen der Getriebevorrichtung 1" bereitgestellt (vgl. oben). Anstelle einer externen Verbindungsleitung erfolgt bei der Ausgestaltung gemäß Fig. 10C der Fluidaustausch vorteilhafterweise dadurch, dass die Passung der Übertragungselemente 5a", 5b" in dem Gehäuse 4" nicht dichtend ausgeführt ist, sondern einen definierten Fluidstrom am Übertragungselement 5a", 5b" vorbei ermöglicht.

Auch bei der Ausgestaltung gemäß Fig. 10C kann die Vorspannung beispielsweise derart gewählt sein, dass ein maximaler Drehzahlunterschied von beispielsweise 10% zwischen Antriebswelle 2a", 2b" und Abtriebswelle 3a", 3b" möglich ist.

Um bei einer Getriebevorrichtung 1, 1', 1" eine Übertragung großer Drehmomente zu ermöglichen (beispielsweise bei Verwendung zum Antreiben eines Schiffs oder einer Lokomotive), können, wie bei der Ausgestaltung gemäß Fig. 11 verwirklicht, auch mehrere übereinander angeordnete Antriebselemente 22a, 22b, 22c vorgesehen sein, die in parallel zueinander verlaufende Nuten 51 a, 51 b, 51 c des Übertragungselements 5 eingreifen.

Die Funktionsweise der Anordnung gemäß Fig. 11 entspricht ansonsten der anhand von Fig. 1 bis 9 beschriebenen Anordnung.

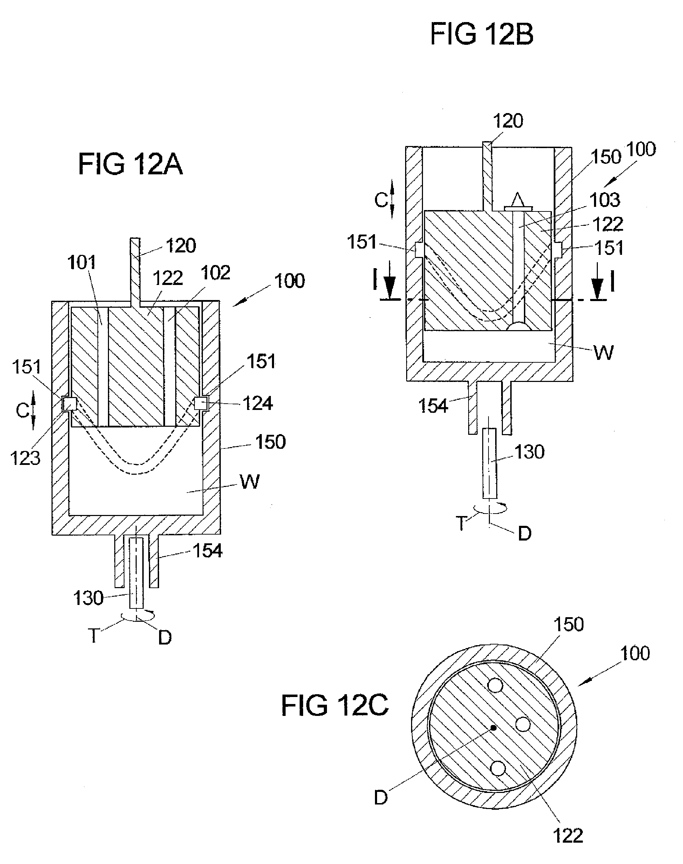

Fig. 12A bis 12C zeigen Ansichten einer Vorrichtung 100 zum Erzeugen eines Drehmoments, die als Verbrennungsmotor ausgebildet ist. Ein über eine feststehende Welle 120 gehaltenes Antriebselement 122 greift dabei über vom Antriebselement 122 vorstehende Bolzen 123, 124 in eine Nut 151 eines Abtriebselementes 150 ein. Das Abtriebselement 150 ist um eine Drehachse D drehbar zum Antriebselement 122 angeordnet und kann hierzu beispielsweise in einem Gehäuse gelagert sein.

Das Antriebselement 122 und das Abtriebselement 150 sind durch den Eingriff der Bolzen 123,124 in die Nut 151 derart zwangsgekoppelt, dass das Abtriebselement 150 bei einer linearen Bewegung C gleichzeitig auch eine Drehbewegung T um die Drehachse D ausführt.

Die Nut 151 erstreckt sich sinusförmig an der dem Antriebselement 122 zugewandeten Innenwand des zylindrischen Abtriebselementes 150 und läuft an der Innenwand um. Dadurch, dass das Antriebselement 122 und das Abtriebselement 150 zwangsgekoppelt sind, bewegt sich das Abtriebselement 150, wenn es in Bewegung versetzt wird, entlang der Nut 151 relativ zum Antriebselement 122 und führt in zwangsgekoppelter Weise eine Drehbewegung T um die Drehachse D und eine lineare Bewegung C in Form einer periodischen Hubbewegung aus.

Zur Montage des Abtriebselementes 150 an dem Antriebselement 122 können die Bolzen 123, 124 beispielsweise in radialer Richtung zur Drehachse D federnd am Antriebselement 122 ausgebildet sein, so dass das Abtriebselement 150 auf das Antriebselement 122 aufgesteckt werden kann und die Bolzen 123, 124 in die Nut 151 einrasten, wenn sie sich über der Nut 151 befinden. Alternativ ist auch möglich, das Abtriebselement 150 beispielsweise zweiteilig mit einem oberen und einem unteren zylindrischen Teil auszubilden, wobei die einzelnen Teile auseinandergenommen werden können, um einen Zugang zu der Nut 151 zu schaffen und die Bolzen 123, 124 in die Nut 151 einführen zu können. Nach Einsetzen der Bolzen 123, 124 in die Nut 151 werden die Teile dann z.B. über einen Bajonettverschluss wieder miteinander verbunden und bilden das Abtriebselement 150 aus.

Das Antriebselement 122 und das Abtriebselement 150 sind dichtend zueinander ausgebildet und schließen einen Raum W ein, in dem durch die lineare Hubbewegung C ein in dem Raum W befindliches Fluid komprimiert werden kann. Fig. 12A zeigt die Vorrichtung 100 in einer Stellung, bei der der zwischen dem Antriebselement 122 und dem Abtriebselement 150 eingeschlossene Raum W ein maximales Volumen aufweist. In der Stellung gemäß Fig. 12B hingegen ist das Antriebselement 122 dem Boden des Abtriebselementes 150 angenähert, so dass das Volumen des Raums W verringert und ein in dem Raum W befindliches Fluid entsprechend verdichtet ist.

An dem feststehenden Antriebselement 122 sind ein Einlassventil 101, ein Auslassventil 102 und eine Zündkerze 103 angeordnet. Über das Einlassventil 101 kann dem Raum W ein Fluid in Form eines geeigneten Brennstoffs zugeführt werden, das über die Zündkerze 103 in verdichtetem Zustand gezündet wird. Durch die Zündung dehnt sich das Fluid explosionsartig aus und treibt das Abtriebselement 150 an, das in zwangsgekoppelter Weise eine Hubbewegung C und gleichzeitig eine Drehbewegung T ausführt. Über das Auslassventil 102 kann das verbrauchte Fluid anschließend wieder aus dem Raum W entfernt werden.

Das Einlassventil 101 und das Auslassventil 102 können in geeigneter Weise zur Regelung der Fluidzufuhr in Abhängigkeit von der Stellung des Abtriebselementes 150 gesteuert werden.

Wie sich aus einer vergleichenden Betrachtung der Ansichten gemäß Fig. 12A und 12B ergibt, weist das zylindrisch ausgebildete Antriebselement 122 eine Höhe auf, die größer als die Höhe der Nut 151 ist (die den maximalen Hub des Abtriebselementes 150 relativ zum Antriebselement 122 definiert). Dadurch überdeckt das Antriebselement 122 die Nut 151 (die in die Innenwand des zylindrischen Abtriebselementes 150 eingeformt ist) derart, dass die Abdichtung des Raums W in jeder Stellung des Abtriebselementes 150 zum Antriebselement 122 gewährleistet ist. Insbesondere überdeckt das Antriebselement 122 die Nut 151 auch in der Stellung gemäß Fig. 12B, in der das Antriebselement 122 dem Boden des Abtriebselementes 150 angenähert ist und der Raum W das kleinstmögliche Volumen aufweist, so dass das Fluid nicht aus dem Raum W entweichen kann.

Das Abtriebselement 150 ist über einen Schaft 154, wie vorangehend anhand des Ausführungsbeispiels von Fig. 1 bis 9 geschildert, mit einer Abtriebswelle 130 in formschlüssiger Weise derart gekoppelt, dass die Drehbewegung T des Abtriebselementes 150 auf die Abtriebswelle 130 übertragen wird, die lineare Bewegung C jedoch nicht.

Anstelle einer Kopplung über den Schaft 154 kann an der zylindrischen Außenwand des Abtriebselementes 150 auch eine Außenverzahnung angeordnet sein, die mit einer Verzahnung eines anzutreibenden Rades oder einer Welle in Eingriff steht, so dass das Abtriebselement 150 selbst als antreibende Zahnwelle dient.

Letztere Variante ermöglicht auch die serielle Anordnung einer Mehrzahl von Vorrichtungen 100, wobei die Außenverzahnungen benachbarter Vorrichtungen 100 zur seriellen Erzeugung eines vergrößerten Drehmomentes miteinander in Eingriff stehen. Werden auf diese Weise beispielsweise vier Vorrichtungen 100 in Reihe geschaltet, vergrößert sich das erzeugte Drehmoment um den Faktor vier. Das Drehmoment kann an einer der Vorrichtungen 100 abgegriffen werden, beispielsweise über die Außenverzahnung des Abtriebselementes 150 oder einen koppelnden Schaft 154 (wie bei dem Ausführungsbeispiel gemäß Fig. 12A und 12B).

Eine Vorrichtung nach Art der Vorrichtung 100 kann auch als Kompressor (beispielsweise einer Klimaanlage) oder als Pumpenvorrichtung verwendet werden. Dabei wird ein zu verdichtendes oder zu förderndes Fluid in Abhängigkeit von der Bewegungsrichtung des Abtriebselementes 150 und geeigneter Steuerung des Einlassventils 101 und des Auslassventils 102 zur Regelung der Fluidzufuhr in den Raum W eingesaugt, in dem Raum W komprimiert und/oder aus dem Raum W ausgestoßen.

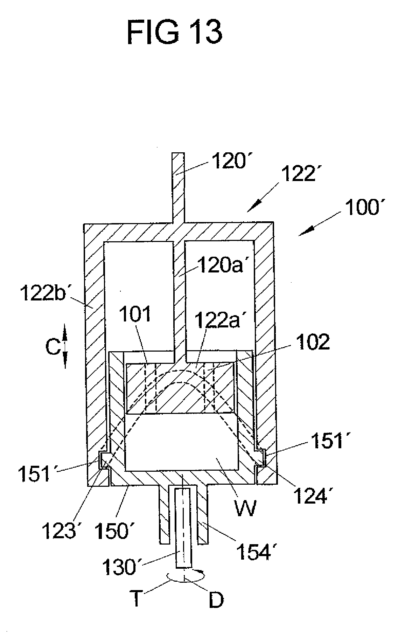

Ein Ausführungsbeispiel einer Vorrichtung 100', die im Vergleich zu der Vorrichtung 100 gemäß Fig. 12A bis 12C mit Hinblick auf die Kopplung zwischen Antriebselement und Abtriebselement kinematisch umgekehrt, ansonsten aber funktionsgleich ist, zeigt Fig. 13. Das Antriebselement 122' ist an einer feststehenden Welle 120' angeordnet und weist einen inneren Abschnitt 122a' und einen äußeren Abschnitt 122b' auf. Der innere, an einem verlängerten Abschnitt 120a' der feststehenden Welle 120' angeordnete Abschnitt 122a' greift in das zylindrische Abtriebselement 150' ein und begrenzt zusammen mit dem Abtriebselement 150' den Raum W, der bei Ausgestaltung der Vorrichtung 100' als Verbrennungsmotor als Brennraum dient. Der (zumindest abschnittsweise zylindrische) äußere Abschnitt 122b' umgreift das Abtriebselement 150', wobei der Abschnitt 122b' zumindest abschnittsweise nach Art eines Bügels ausgebildet sein kann und einen Zugriff auf den inneren Abschnitt 122a' beispielsweise zum Zuführen von Zuleitungen ermöglicht. Lediglich in seinem unteren Bereich, in dem eine Nut 151' angeordnet ist, ist der Abschnitt 122b' nach Art eines zylindrischen, geschlossenen Rings ausgebildet. In jedem Fall ist die Passung zwischen dem Abschnitt 122b' und dem Abtriebselement 150' nicht dichtend auszuführen.

Bei dem Ausführungsbeispiel gemäß Fig. 13 ist in kinematischer Umkehr zur Vorrichtung 100 gemäß Fig. 12A bis 12C die Nut 151' an dem zumindest in seinem unteren Bereich zylindrischen Abschnitt 122b' des Antriebselementes 122' angeordnet und umläuft den Abschnitt 122b' an seiner dem Abtriebselement 150' zugewandten Innenwand. Die Nut 151' erstreckt sich wiederum sinusförmig und definiert die Zwangskopplung zwischen dem Antriebselement 122' und dem Abtriebselement 150', wobei an dem Abtriebselement 150' angeordnete Bolzen 123', 124' in die Nut 151' eingreifen und so die Zwangskopplung herstellen.

Das Abtriebselement 150' weist einen zylindrischen Schaft 154' auf, der über eine in Umfangsrichtung formschlüssige Kopplung mit einer Abtriebswelle 130' derart verbunden ist, dass ein erzeugtes Drehmoment bzw. eine Drehbewegung T auf die Abtriebswelle 130' übertragen wird, eine lineare Bewegung C des Abtriebselementes 150' jedoch nicht.

Die Vorrichtung 100' gemäß Fig. 13 weist gegenüber der Vorrichtung 100 gemäß Fig. 12A bis 12C den Vorteil auf, dass die Nut 151' außerhalb des Raums W angeordnet ist. Die Abdichtung des inneren Abschnitts 122a' des Antriebselementes 122' zum Abtriebselement 150' ist dadurch erleichtert. Insbesondere ist nicht erforderlich, dass die Höhe des Abschnitts 122a' die Höhe der Nut 151' übersteigt.

Eine Vorrichtung nach Art der Vorrichtung 100' kann wiederum als Verbrennungsmotor (mit an dem inneren Abschnitt 122a' des Antriebselementes 122' angeordnetem Einlassventil 101, Auslassventil 102 und Zündkerze 103), als Pumpe oder Kompressor oder allgemein zur Komprimierung eines Fluids (beispielsweise bei einem hydraulischen Getriebe) eingesetzt werden.

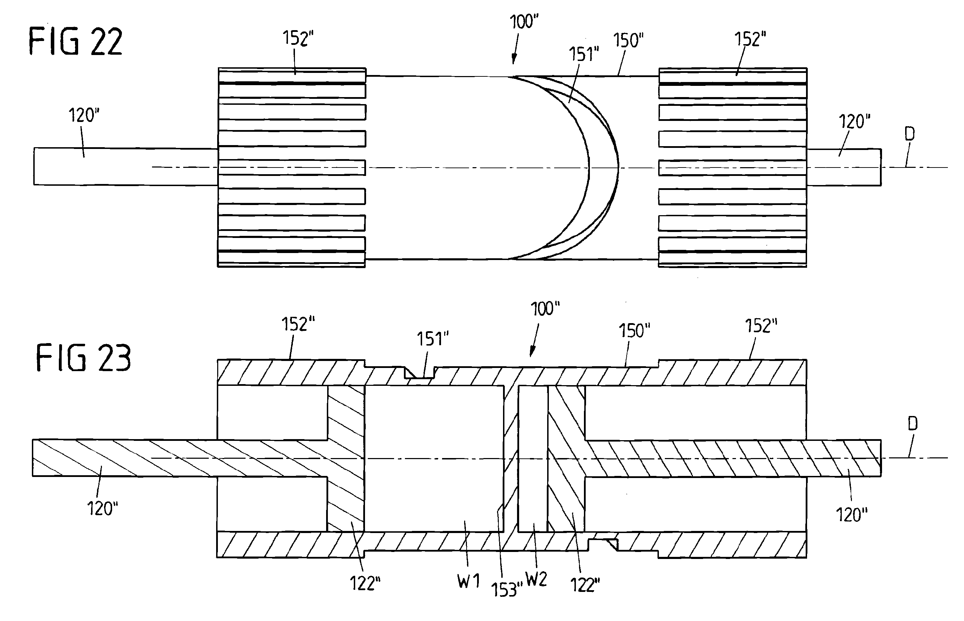

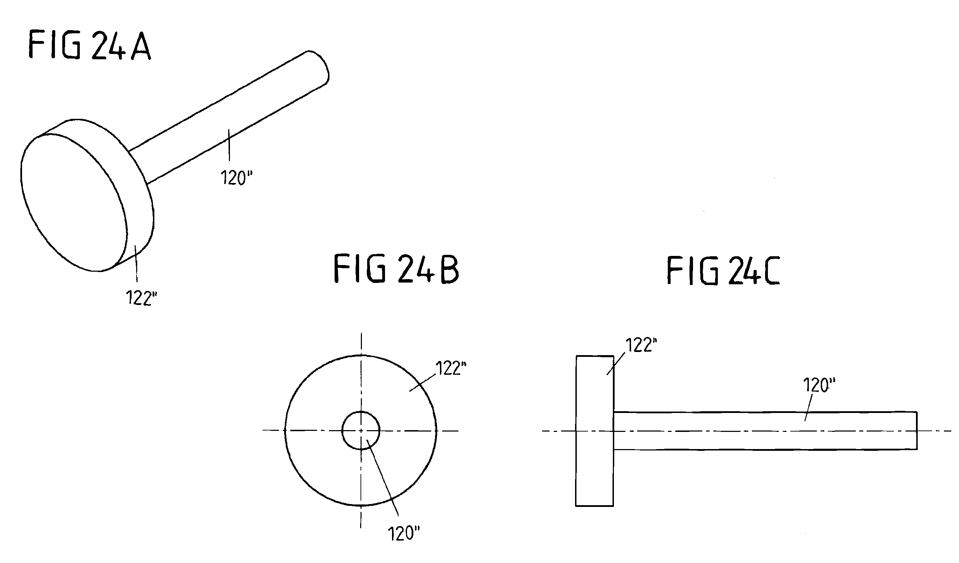

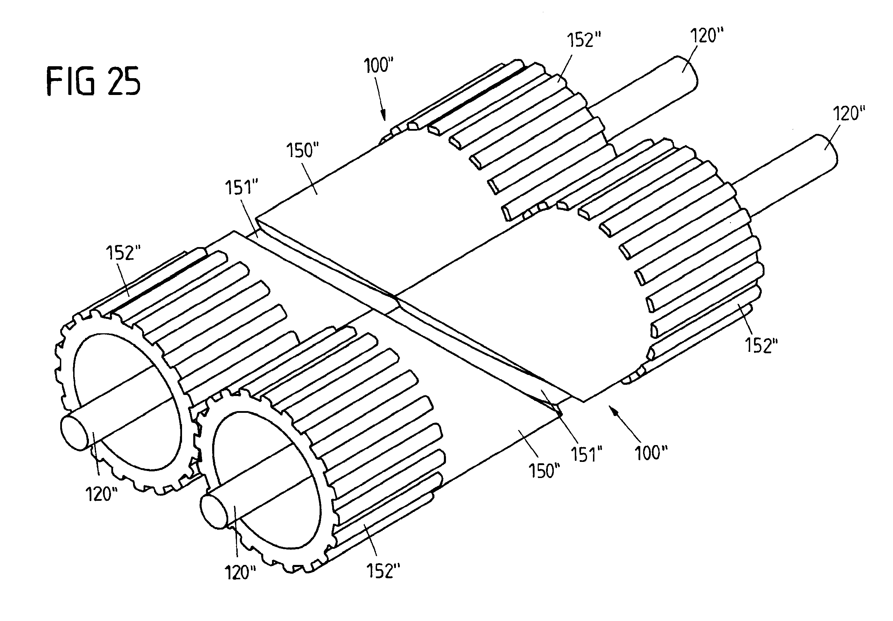

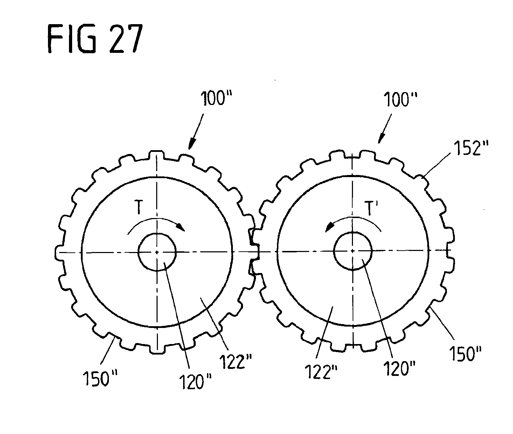

Eine weitere Ausführungsform einer Vorrichtung 100" zum Erzeugen oder Wandeln eines Drehmoments ist in Fig. 22 bis 27 dargestellt. Fig. 22 bis 24 zeigen hier zunächst eine einzelne Vorrichtung 100" bei Ausbildung als Zweizylindermotor, während in Fig. 25 bis 27 zwei Vorrichtungen 100" parallel geschaltet sind, um einen Vierzylindermotor zu schaffen.

Analog wie die vorangehend anhand von Fig. 12 und 13 geschilderten Vorrichtungen verwendet auch die Vorrichtung 100" gemäß Fig. 22 bis 24 im Prinzip ein feststehendes Antriebselement 122" und ein zu diesem Antriebselement 122" drehbares und gleichzeitig entlang einer Drehachse D verschiebbares Abtriebselement 150". Die Vorrichtung 100" weist dabei zwei Antriebselemente 122" auf, die jeweils an einer feststehenden Welle 120" angeordnet sind.

Das Abtriebselement 150" ist als zylindrische Hohlwelle ausgebildet und um die Drehachse D drehbar und gleichzeitig entlang der Drehachse D verschiebbar. An der zylindrischen Außenseite des Abtriebselements 150" ist eine umlaufende Nut 151" angeordnet, die mit mindestens einem Bolzen (in Fig. 22 bis 24 nicht dargestellt) in Eingriff steht. Der Bolzen ist hierbei in ortsfester Lagebeziehung zu den Antriebselementen 122" und definiert damit eine Zwangskopplung des Abtriebselements 150" mit den Antriebselementen 122".

Der oder die Bolzen können beispielsweise über einen feststehenden Bügel oder dergleichen mit einer der feststehenden Wellen 120" verbunden sein oder an einem Gehäuse angeordnet sein, an dem auch die feststehenden Wellen 120" angeordnet sind.

Denkbar ist in diesem Zusammenhang auch, den oder die Bolzen entlang der Drehachse D verschieblich beispielsweise an einem Gehäuse anzuordnen, um durch Verschieben der Bolzen die Bewegung des Abtriebselements 150" zusätzlich zu steuern.

Das als zylindrische Hohlwelle ausgebildete Abtriebselement 150" definiert zusammen mit den Antriebselementen 122" und einer das Abtriebselement 150" mittig teilenden Wand 153" zwei Räume W1, W2, die bei Ausbildung der Vorrichtung 100" als Verbrennungsmotor als Brennräume dienen. Die Antriebselemente 122" sind nach Art von Kolben gegenüber der inneren Wandung des Abtriebselements 150" abgedichtet, so dass ein in den Räumen W1, W2 befindliches Fluid bei einer linearen Bewegung entlang der Drehachse D des Abtriebselements 150" relativ zu den Antriebselementen 122" komprimierbar ist.

Im Betrieb der Vorrichtung 100" führt das Abtriebselement 150" eine Drehbewegung um die Drehachse D aus und rotiert damit um die Antriebselemente 122". Durch die Zwangskopplung über die Nut 151" wird gleichzeitig das Abtriebselement 150" in eine lineare Bewegung entlang der Drehachse D relativ zu den Antriebselementen 122" versetzt, so dass sich die Volumina der Räume W1, W2 ändern. Während beispielsweise das Volumen des einen Raums W1 bzw. W2 sich verkleinert, vergrößert sich gleichzeitig das Volumen des anderen Raums W2 bzw. W1. Wird dabei über an den Antriebselementen 122" angeordnete Einlass- und Auslassventile ein Brennstoff in geeigneter Weise zugeführt und gezündet, so kann hierdurch das Abtriebselement 150" zur weiteren Drehbewegung angetrieben werden.

An der zylindrischen Außenseite des Abtriebselements 150" sind an den beiden Endabschnitten Verzahnungen 152" angeordnet, über die die Drehbewegung des Abtriebselements 150" auf anzutreibende Bauteile, beispielsweise eine anzutreibende Welle, übertragen werden kann.

Vorteil der Vorrichtung 100" ist die symmetrische Ausbildung im Sinne einer Zweizylinderanordnung, bei der eine Verdichtung in einem Raum W1, W2 gleichzeitig zu einer Volumenvergrößerung im anderen Raum W2, W1 führt.

Mit der Vorrichtung 100" kann in einfacher Weise ein Vier- oder auch Mehrzylindermotor geschaffen werden. Dies ist in Fig. 25 bis 27 veranschaulicht. Um einen Vierzylindermotor zu schaffen, werden zwei Vorrichtungen 100" parallel zueinander angeordnet, so dass zwei Abtriebselemente 150" jeweils zu zwei Antriebselementen 122" drehbar und gleichzeitig linear verschieblich sind. Das eine Abtriebselement 150" ist dabei zu einer Drehachse D und das zweite Abtriebselement 150" zu einer zweiten, parallelen Drehachse D' drehbar angeordnet, wobei beide Abtriebselemente 150" auch entlang der jeweiligen Drehachse D, D' verschieblich gelagert sind.

Die Abtriebselemente 150" stehen über ihre Verzahnungen 152" miteinander in Eingriff, so dass die Drehbewegung eines der Abtriebselemente 150" auf das andere der Abtriebselemente 150" übertragen wird.

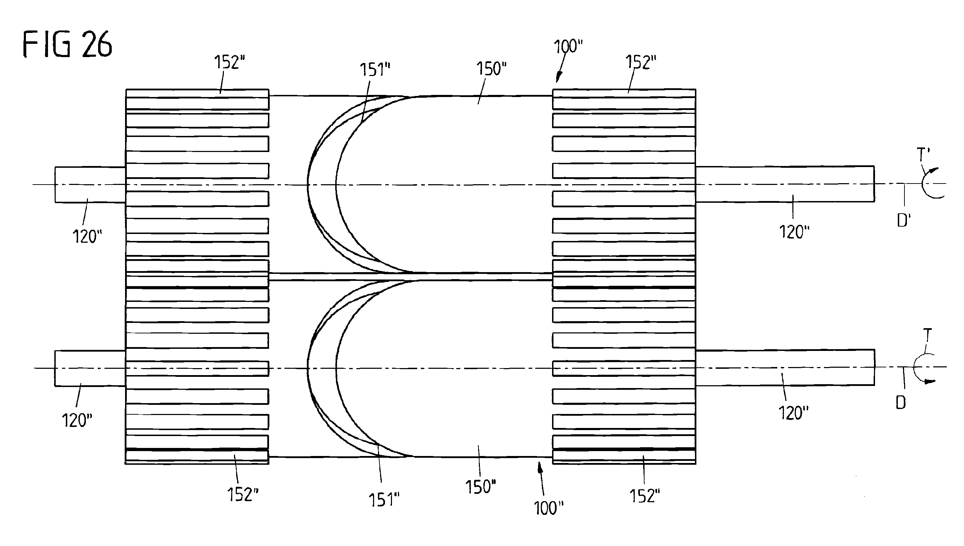

Dreht sich beispielsweise, wie dies in Fig. 26, veranschaulicht ist, das eine Abtriebselement 150" mit einer Drehbewegung T um die Drehachse D, so wird das andere Abtriebselement 150" gleichzeitig in eine entgegen gesetzte Drehbewegung T' um die Drehachse D' versetzt.

Die Abtriebselemente 150" können auch gegeneinander entlang der Drehachsen D, D' verschieblich sein, um eine gegenphasige Bewegung der beiden Abtriebselemente 150" zu ermöglich und so Unwuchten zu vermeiden.

Bei der Anordnung gemäß Fig. 25 bis 27 steht jedes Abtriebselement 150" über jeweils eine Nut 151" mit einem festen Bolzen in Eingriff, so dass, wie vorangehend beschrieben, die Abtriebselemente 150" jeweils zwangsgekoppelt zu den Antriebselementen 122" sind.

Über die Verzahnungen 152" der Abtriebselementen 150" können die anzutreibenden Bauteile angetrieben werden. Beispielsweise kann eine anzutreibende Welle über eine daran angeordnete Verzahnung mit einer der Verzahnungen 152" in Eingriff stehen und so in eine Drehbewegung versetzt werden.

Mit der Zusammenschaltung zweier Vorrichtungen 100" wird eine Vierzylinderanordnung geschaffen, bei der bei Ausbildung der Vorrichtung 100' als Verbrennungsmotor über vier Antriebselemente 122" im Betrieb vier Räume als Brennräume genutzt werden, in denen abwechselnd ein Fluid verdichtet und gezündet werden kann.

Die Anordnung ist in beliebiger Weise skalierbar, so dass in leichter Weise Sechs-, Acht- oder auch noch mehrzylindrige Motoren geschaffen werden können.

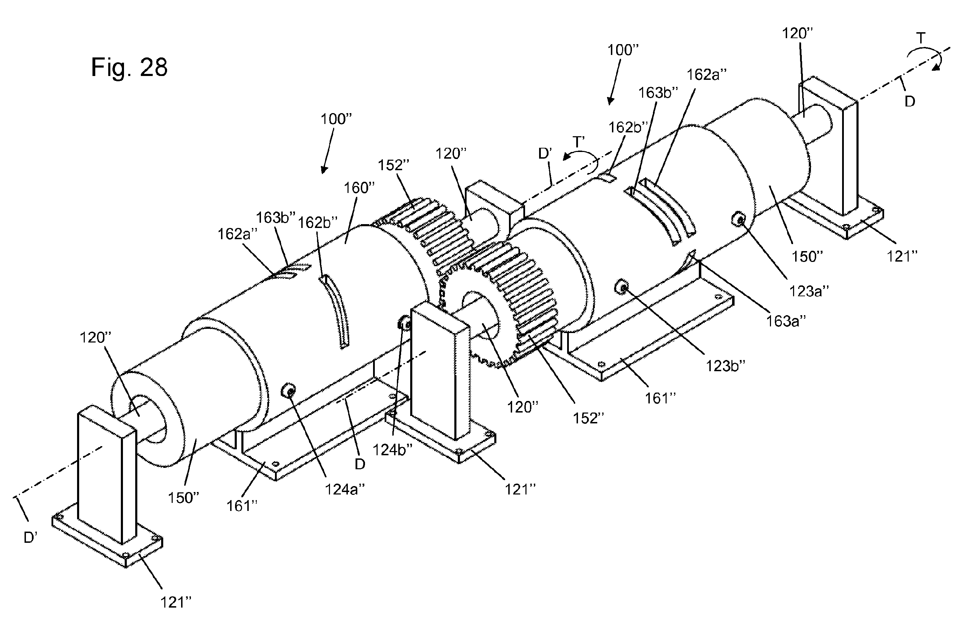

Eine modifizierte Vorrichtung 100" zur Erzeugung eines Drehmomentes, die beispielsweise als Verbrennungsmotor eingesetzt werden kann, ist in Fig. 28 bis 32 dargestellt. Die Wirkweise der Vorrichtung 100" ist dabei im Prinzip gleich der vorangehend anhand von Fig. 22 bis 27 beschriebenen Vorrichtung. Entsprechend sind für Bauteile gleicher Funktion, soweit zweckdienlich, die gleichen Bezugszeichen verwendet worden.

Fig. 28 zeigt eine perspektivische Ansicht zweier Vorrichtungen 100", die parallel zueinander angeordnet sind und nach Art einer Vierzylinderanordnung zusammenwirken. Im Unterschied zu der Anordnung gemäß Fig. 22 bis 27 ist bei den Vorrichtungen 100" gemäß Fig. 28 bis 32 ein als Hohlwelle ausgebildetes Abtriebselement 150" jeweils in einem Führungselement 160" angeordnet und geführt. Das Führungselement 160" ist hierbei als Rohrabschnitt ausgebildet und nimmt das Abtriebselement 150" in seinem Inneren auf.

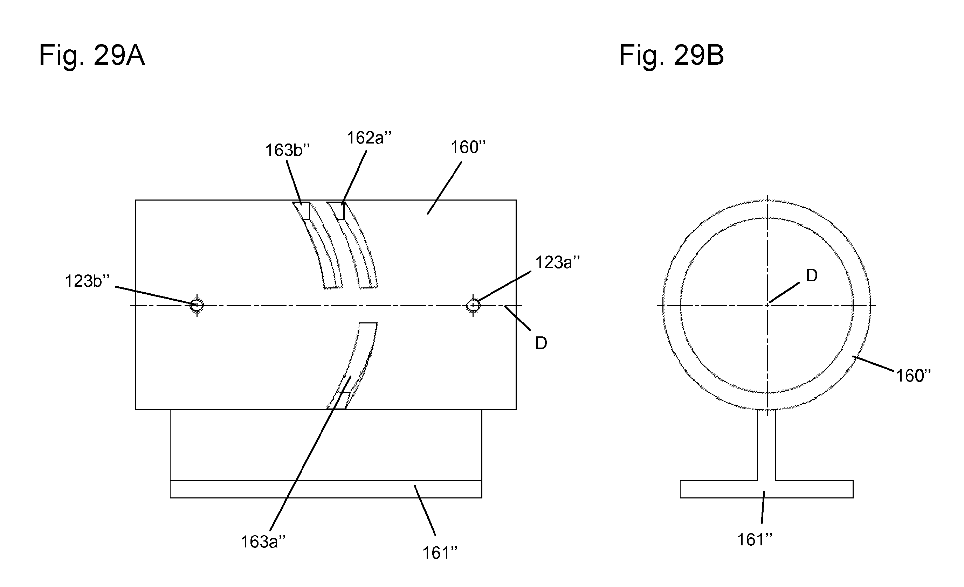

Eine Seitenansicht und eine Vorderansicht des Führungselements 160" ist in Fig. 29A bzw. Fig. 29B dargestellt. Das Führungselement 160" ist über einen Fuß 161" feststehend montiert.

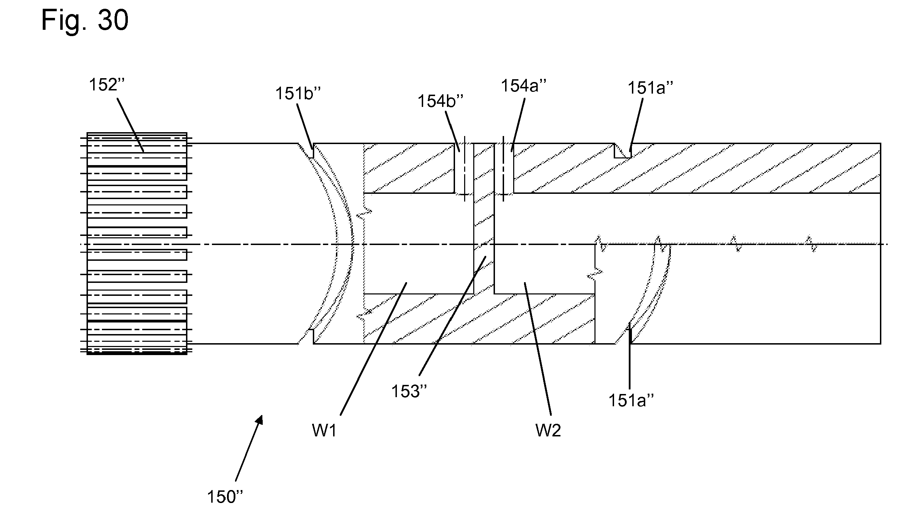

Fig. 30 zeigt eine Teilschnittansicht des als Hohlwelle ausgebildeten Abtriebselementes 150".

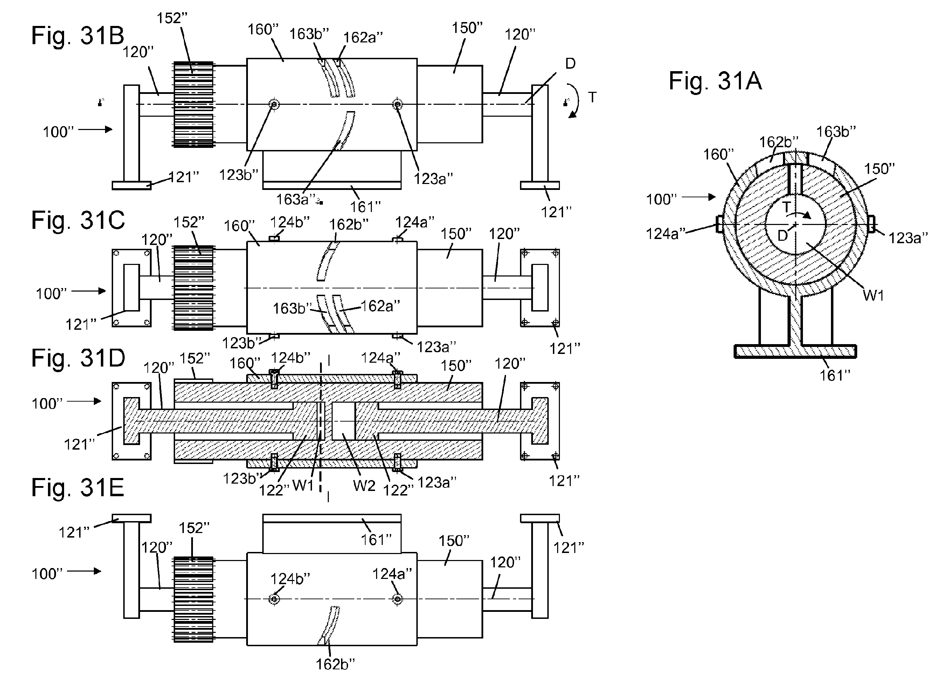

Fig. 31A bis 31E zeigen in unterschiedlichen, teilweise geschnittenen Ansichten eine einzelne Vorrichtung 100" mit ihren zusammenwirkenden Bauteilen.

Das Abtriebselement 150" ist als Hohlwelle ausgebildet. Der Innenraum der Hohlwelle ist dabei über eine Wand 153" geteilt und bildet zusammen mit zwei in den Innenraum eingreifenden Antriebselementen 122" (siehe Fig. 31D) zwei Kammern W1, W2 aus, die als Brennräume des Verbrennungsmotors dienen. Die Antriebselemente 122" sind über Abriebswellen 120" und Füße 121" feststehend montiert und befinden sich damit in ortsfester Lagebeziehung zu dem Führungselement 160".

Außenseitig an dem Abtriebselement 150" sind zwei Nuten 151a", 151b" ausgebildet (siehe Fig. 30), in die am Führungselement 160" fest angeordnete Bolzen 123a", 123b", 124a", 124b" eingreifen. Über die Nuten 151a", 151b", die außenseitig um das zylindrische Abtriebselement 150" umlaufen und jeweils eine Sinuskurve nachbilden, und den Eingriff der Bolzen 123a", 123b", 124a", 124b" ist das Abtriebselement 150" derart mit dem Führungselement 160" zwangsgekoppelt, dass bei einer Drehbewegung T um die der Längsachse des Abtriebselementes 150" entsprechende Drehachse D das Abtriebselement 150" gleichzeitig eine lineare Bewegung entlang der Drehachse D ausführt.

Auf diese Weise verwirklicht die Vorrichtung 100" eine Zweizylinderanordnung, bei der sich bei Drehbewegung T des Abtriebselements 150" ein Raum W1 bzw. W2 verkleinert und gleichzeitig der andere Raum W2 bzw. W1 vergrößert, so dass über geeignete Fluidzufuhr eine Fluidverdichtung und Zündung erfolgen kann, um einen Verbrennungsmotor zu verwirklichen.

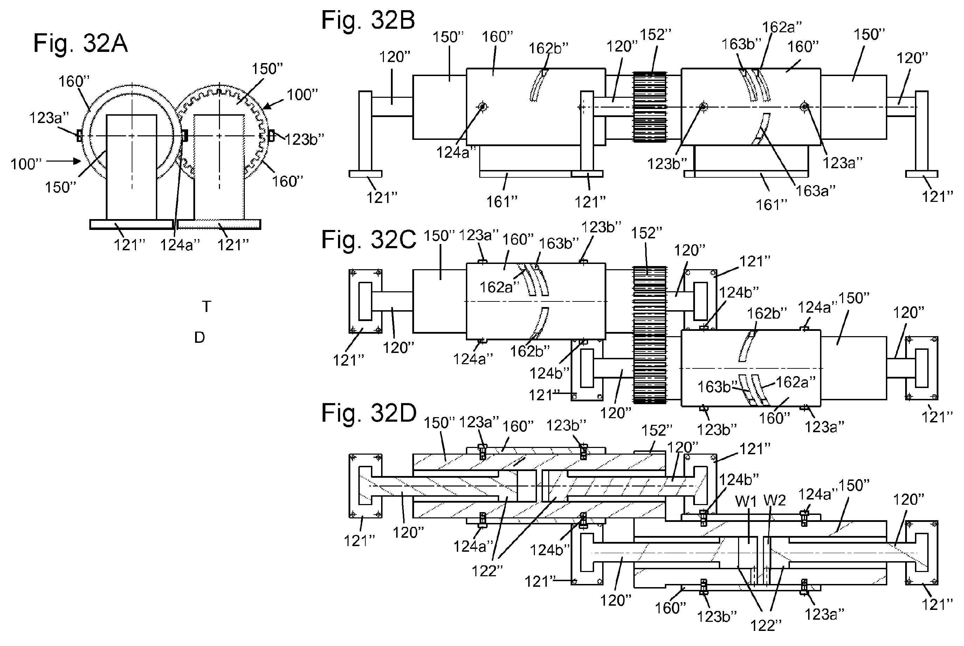

In Fig. 28 und Fig. 32A bis 32D sind zwei zusammenwirkende Vorrichtungen 100" dargestellt, die über je eine Verzahnung 152" an dem Abtriebselement 150" miteinander in Eingriff stehen und eine Vierzylinderanordnung ausbilden. Fig. 28 zeigt hier eine perspektivische Ansicht dieser Vierzylinderanordnung und Fig. 32A bis 32D unterschiedliche, teilweise geschnittene Ansichten. Die Vorrichtungen 100" wirken derart zusammen, dass die eine (in Fig. 28 vordere) Vorrichtung 100" eine Drehbewegung T um die Drehachse D und die andere Vorrichtung 100" eine entgegen gesetzte Drehbewegung T' um eine parallele Drehachse D' ausführt.

Über eine der Verzahnungen 152" kann eine Welle oder ein anderes anzutreibendes Bauteil angetrieben und ein Drehmoment abgegeben werden.

Bei der Vorrichtung 100" gemäß Fig. 28 bis 32 sind Einlassventile und Auslassventile in das Führungselement 160", das das Abtriebselement 150" aufnimmt, integriert. Die Einlassventile und Auslassventile sind hier durch schlitzartig ausgebildete Durchlassöffnungen 162a", 163a", 162b", 163b" verwirklicht, die am äußeren Umfang des Führungselements 160" ausgebildet sind. Die Durchlassöffnungen 162a", 163a", 162b", 163b" des Führungselementes 160" wirken mit Durchlassöffnungen 154a", 154b" des Abtriebselementes 150" zur Verwirklichung von Einlassventilen und Auslassventilen zusammen derart, dass keine separate Steuerung und keine separaten Verschlussmechanismen für die Ventile erforderlich sind. Dadurch, dass die Durchlassöffnungen 154a", 154b" (siehe Fig. 30) des Abtriebselementes 150" bei einer Drehbewegung T, T' des Abtriebselementes 150" in den Bereich der Durchlassöffnungen 162a", 163a", 162b", 163b" gelangen, wird bei der Drehbewegung T, T' ein Durchlass geschaffen, durch den ein Fluid in die Räume W1, W2 des Abtriebselements 150" geleitet und - bei Ausbildung als Verbrennungsmotor - nach Zündung wieder entfernt werden kann.

Die Durchlassöffnungen 162a", 163a", 162b", 163b" sind so am Führungselement 160" angeordnet, dass sie die Bewegungsbahn der Durchlassöffnungen 154a", 154b" des Abtriebselementes 150" abschnittsweise überdecken und die Bewegungsbahn abschnittsweise nachzeichnen. Die Durchlassöffnungen 162a", 163a" sind hierbei dem Raum W2 und der Durchlassöffnung 154a" des Abtriebselements 150" zugeordnet, während die Durchlassöffnungen 162b", 163b" des Führungselementes 160" dem Raum W1 und der Durchlassöffnung 154b" des Abtriebselements 150" zugeordnet sind.

Fig. 31A zeigt eine Schnittansicht entlang der Linie I-I gemäß Fig. 31D in einer Stellung des Abtriebselements 150", bei der der Raum W1 maximal verkleinert und der Raum W2 maximal vergrößert ist. Die dem Raum W1 zugeordnete Durchlassöffnung 154b" des Abtriebselementes 150" befindet sich hierbei in einer oberen Position (siehe Fig. 31A), in der sie gerade zwischen den dem Raum W1 zugeordneten Durchlassöffnungen 162b", 163b" des Führungselementes 160" angeordnet ist. Führt das Abtriebselement 150" nun eine Drehbewegung T um die Drehachse D aus, so gelangt die Durchlassöffnung 154b" des Abtriebselementes 150" in den Bereich der Durchlassöffnung 163b" am Führungselement 160", so dass der Durchlass zwischen Führungselement 160" und Abtriebselement 150" geöffnet ist und - zur Verwirklichung eines Einlassventils - ein Fluid in den Raum W1 geleitet werden kann.

Nach weiterer Drehbewegung T gelangt die Durchlassöffnung 154b" schließlich aus dem Bereich der Durchlassöffnung 163b" am Führungselement 160". Das Einlassventil ist damit geschlossen; ein Durchgang durch Führungselement 160" und Abtriebselement 150" hindurch besteht nicht mehr.

Während des Einlassvorgangs hat sich der Raum W1 vergrößert und entsprechend der Raum W2 verkleinert. Nach Beendigung des Einlassvorgangs und weiterer Drehbewegung T um die Drehachse D verkleinert sich der Raum W1 nunmehr wieder, das darin befindliche Fluid wird verdichtet und kann gezündet werden, wenn sich die Durchlassöffnung 154b" in einer unteren Position befindet (also entgegen gesetzt der in Fig. 31A gezeigten Position). Hierzu kann am Führungselement 160" eine Zündkerze oder andere Zündvorrichtung vorgesehen sein. Auch eine Selbstzündung ist möglich.

Durch die Zündung des Fluids wird das Abtriebselement 150" zur weiteren Drehbewegung T angetrieben; der Raum W1 vergrößert sich.

Nach Vergrößerung gelangt die Durchlassöffnung 154b" in den Bereich der Durchlassöffnung 162b" am Führungselement 160", das als Auslassventil dient. Bei weiterer Drehbewegung T bewegt sich die Durchlassöffnung 154b" entlang der Durchlassöffnung 162b" und schafft somit einen Durchgang, durch den das verbrauchte Fluid aus dem Raum W1 ausgelassen werden kann, analog wie dies von herkömmlichen Viertaktanordnungen bekannt ist.

Entsprechend läuft der Vorgang auch in dem zweiten Zylinder (Raum W2) der Vorrichtung 100" ab, wobei die entsprechenden Durchlassöffnungen 162a", 163a" um 90° am äußeren Umfang des Führungselements 160" versetzt sind und dadurch der Vorgang um 90° phasenversetzt abläuft.

Entsprechend läuft weiterhin auch der Vorgang in einer weiteren Vorrichtung 100" ab, wenn mehrere Vorrichtungen 100" parallel zueinander angeordnet sind, wie dies Fig. 28 und Fig. 32 zeigen. Die Durchlassöffnungen am Führungselement 160" und am Abtriebselement 150" sind hierbei gerade so angeordnet, dass die einzelnen Einlass-, Verdichtungs-, Brenn- und Auslassvorgänge gerade 90° zueinander phasenversetzt sind, so dass im Betrieb gerade alle 90° während der Drehbewegung T, T' in einer der vier Kammern W1, W2 der Anordnung ein Brennvorgang stattfindet.

Wie aus Fig. 28 und Fig. 32 ersichtlich, sind die Abtriebselemente 150" der Vierzylinderanordnung so angeordnet, dass sie sich synchron entlang der Drehachse D bewegen, also im Betrieb der Anordnung sich nicht relativ zueinander verschieben.

Bei anderer Anordnung und Ausgestaltung wäre auch möglich, dass die einzelnen Vorrichtungen 100" einer Vierzylinderanordnung im Betrieb relativ zueinander verschieblich sind und sich linear gegeneinander bewegen.

Bei den in Fig. 28 bis 32 dargestellten Anordnungen sind die Antriebselemente 122" jeweils über Antriebswellen 120" und Füße 121" ortsfest angeordnet. Denkbar ist herbei auch eine Verstellbarkeit der Antriebselemente 122" entlang der Drehachse D, D' vorzusehen, um die Volumen der Räume W1, W2 anzupassen.

Bei der Ausführungsform gemäß Fig. 28 bis 32 kann das als Hohlwelle ausgebildete Abtriebselement 150" mit einer am Führungselement 160" anliegenden Außenwand und einer mit den Antriebselementen 122" zusammenwirkenden Innenwand ausgebildet sein, die beispielsweise über Stege miteinander verbunden sind und zwischen denen sich ein Hohlraum befindet. Im Betrieb der Vorrichtung 100" kann durch diesen Hohlraum, also zwischen den Wandungen der Hohlwelle hindurch, Luft oder ein anderes geeignetes Kühlmittel wie Wasser oder eine Kühlflüssigkeit zur Kühlung geleitet werden.

Ein Vorteil der Anordnungen gemäß Fig. 28 bis 32 ist, dass keine separaten Einlass- und Auslassventile mit zusätzlicher Steuerung und zusätzlichen Verschlussmechanismen vorgesehen werden müssen. Die Einlassventile und Auslassventile werden durch Durchlassöffnungen 162a", 163a", 162b", 163b" und 154a", 154b" gebildet und öffnen und verschließen sich selbsttätig bei Drehung des Abtriebselements 150".

Die vorangehend beschriebenen Vorrichtungen 100, 100', 100" sind als Verbrennungsmotoren beispielsweise in der Fahrzeugtechnik vorteilhaft einsetzbar, aber auch überall dort, wo Verbrennungsmotoren zum Antreiben von Bauteilen verwendet werden können. Die Vorrichtungen 100, 100', 100" können aber auch als Pumpen oder Kompressoren zur Förderung oder Verdichtung eines Fluid eingesetzt werden.

Der der Erfindung zugrunde liegende Gedanke ist nicht auf die vorangehend geschilderten Ausführungsbeispiele beschränkt, sondern lässt sich vielmehr auch bei gänzlich anders gearteten Ausführungsformen verwirklichen.

### Bezugszeichenliste

- 1, 1': Getriebevorrichtung
- 2, 2', 2a", 2b": Antriebswelle
- 21: Dicht- und Lagervorrichtung
- 22, 22a-c: Antriebselement
- 221: Aussparungen
- 23, 24: Bolzen
- 25, 25": Kegelrad
- 3, 3', 3a", 3b": Abtriebswelle
- 31: Dicht- und Lagervorrichtung
- 32: Kopplungsabschnitt
- 320: Außenverzahnung
- 4, 4": Getriebegehäuse
- 40: Innenwand
- 41: Leitungsverbindung
- 42: Steuerventil
- 43, 44: Aussparung
- 5, 5a", 5b": Übertragungselement
- 51, 51a-c: Nut
- 52: Zylinderwand
- 520: Innenseite
- 521: Außenseite
- 53: Grundplatte
- 530: Zentraler Bereich
- 54: Schaft
- 540: Innenverzahnung
- 6: Welle
- 61: Kegelrad
- 71,72: Rad
- 100, 100', 100": Antriebsvorrichtung
- 101: Einlassventil
- 102: Auslassventil
- 103: Zündkerze
- 120, 120', 120": Feststehende Welle
- 120a': Abschnitt
- 121": Fuß
- 122, 122', 122": Antriebselement
- 122a', 122b': Abschnitt
- 123, 124, 123', 124': Bolzen
- 123a", 123b", 124a", 124b": Bolzen
- 130, 130': Abtriebswelle
- 150, 150', 150": Abtriebselement
- 151, 151', 151 ", 151a", 151b": Nut
- 152": Verzahnung
- 153": Wand
- 154a", 154b": Durchlassöffnung
- 160": Führungselement
- 161": Fuß
- 162a", 162b", 163a", 163b": Durchlassöffnung
- 200: Getriebevorrichtung
- 201: Bolzen
- 202: Abtriebswelle
- 203: Antriebswelle
- 204: Lager
- 205: Übertragungselement
- 206: Vorspannelement
- 207: Feder
- 208: Stege
- 209: Stift
- 210: Bügel
- 211: Nut
- 212: Lager
- 213: Bohrung
- 214: Langloch
- 215: Abschnitt
- 216: Aussparung
- A0: Drehgeschwindigkeit
- A1, A2: Drehgeschwindigkeit
- B: Bewegung
- C: Bewegung
- D, D': Drehachse
- F: Fluidstrom
- H: Höhe
- H1, H2: Abstand
- S1: Drehgeschwindigkeit
- S2: Drehgeschwindigkeit
- T, T': Drehbewegung
- V: Raum
- V1, V2: Teilraum
- W, W1, W2: Raum

## Patentansprüche

1. Vorrichtung zum Erzeugen oder Wandeln eines Drehmoments, mit
- einem feststehenden Antriebselement (122, 122', 122") und
- einem relativ zum feststehenden Antriebselement (122, 122', 122") drehbaren Abtriebselement (150, 150', 150"), das ausgebildet ist, eine lineare Bewegung relativ zum Antriebselement (122, 122', 122") auszuführen,
wobei das feststehende Antriebselement (122, 122', 122") über einen Eingriff in eine Nut (151, 151', 151 ") mit dem Abtriebselement (150, 150', 150") derart zwangsgekoppelt ist, dass das Abtriebselement (150, 150', 150"), wenn das Abtriebselement (150, 150', 150") angetrieben wird, gleichzeitig eine Drehbewegung (T, T') und eine lineare Bewegung (C) ausführt, wobei das Abtriebselement (150, 150', 150") als zylindrische Hohlwelle ausgebildet ist, in die das feststehende Antriebselement (10, 120', 120") eingreift,
**dadurch gekennzeichnet,**
**dass** das Abtriebselement (150, 150', 150") mit zwei feststehenden Antriebselementen (122, 122', 122") zusammenwirkt und zusammen mit den zwei feststehenden Antriebselementen (122, 122', 122") zwei Kammern nach Art einer Zweizylinderanordnung ausbildet.

2. Vorrichtung nach Anspruch 1, **dadurch gekennzeichnet, dass** das Antriebselement (122, 122', 122") feststehend ausgebildet und das Abtriebselement (150, 150', 150") um eine Drehachse (D) relativ zum Antriebselement (122, 122', 122") drehbar ist, wobei die lineare Bewegung (C) des Abtriebselementes (150, 150', 150") axial entlang der Drehachse (D) gerichtet ist.

3. Vorrichtung nach Anspruch 1 oder 2, **dadurch gekennzeichnet, dass** das Antriebselement (122, 122', 122") und das Abtriebselement (150, 150', 150") einen Raum (W, W1, W2) begrenzen, dessen Volumen sich bei einer linearen Bewegung (C) in Form einer periodischen Hubbewegung des Abtriebelementes (150, 150', 150") relativ zum Antriebselement (122, 122', 122") periodisch verändert.

4. Vorrichtung nach Anspruch 3, **dadurch gekennzeichnet, dass** ein in dem Raum (W) befindliches Fluid durch die lineare Bewegung (C) des Abtriebelementes (150, 150', 150") relativ zum Antriebselement (122, 122', 122") komprimierbar ist.

5. Vorrichtung nach Anspruch 4, **dadurch gekennzeichnet, dass** die Vorrichtung (100, 100', 100") zur Erzeugung eines Drehmoments ausgebildet ist, wobei der Raum (W) als Brennraum dient und durch die Zwangskopplung die lineare Bewegung (C) des Abtriebselementes (150, 150', 150") relativ zum Antriebselement (122, 122', 122") in eine Drehbewegung des Abtriebselementes (150, 150', 150") umgesetzt wird.

6. Vorrichtung nach Anspruch 5, **dadurch gekennzeichnet, dass** an dem Antriebselement (122, 122', 122") ein Einlassventil (101) und ein Auslassventil (102) zum Einlassen und Auslassen des Fluids in den Raum (W, W1, W2) angeordnet sind.

7. Vorrichtung nach Anspruch 5 oder 6, **dadurch gekennzeichnet, dass** an dem Antriebselement (122, 122', 122") eine Zündkerze (103) zum Zünden des Fluids angeordnet ist.

8. Vorrichtung nach einem der vorangehenden Ansprüche, **dadurch gekennzeichnet, dass** die Nut (151) sich sinusförmig an dem Abtriebselement (150) erstreckt und an einer dem Antriebselement (122) zugewandten Seite des zylindrisch ausgebildeten Abtriebselementes (150) umläuft.

9. Vorrichtung nach einem der vorangehenden Ansprüche, **dadurch gekennzeichnet, dass** die Nut (151') sich sinusförmig an einem das Abtriebselement (150') umgreifenden, Abschnitt (122b') des Antriebselementes (122') erstreckt und an einer dem Abtriebselement (150') zugewandten Seite des Abschnitts (122b') des Antriebselementes (122') umläuft.

10. Vorrichtung nach einem der vorangehenden Ansprüche, **dadurch gekennzeichnet, dass** das Abtriebselement (150, 150', 150") einen sich axial erstreckenden Schaft (154, 154') aufweist, an dem eine Abtriebswelle (130, 130') axial verschieblich und in Umfangsrichtung formschlüssig angeordnet ist.

11. Vorrichtung nach einem der vorangehenden Ansprüche, **dadurch gekennzeichnet, dass** das Abtriebselement (150, 150', 150") eine Verzahnung zum Zusammenwirken mit einem weiteren Abtriebselement (150, 150', 150") aufweist.

12. Vorrichtung nach einem der vorangehenden Ansprüche, **dadurch gekennzeichnet, dass** das Abtriebselement (150, 150', 150") in einem feststehenden zylindrischen Führungselement (160") geführt ist.

13. Vorrichtung nach Anspruch 12, **dadurch gekennzeichnet, dass** an dem zylindrischen Führungselement (160") ein Einlassventil zum Einlassen eines Fluids und ein Auslassventil zum Auslassen eines Fluids angeordnet sind, die durch Durchlassöffnungen (162a", 162b", 163a", 163b") ausgebildet sind, die bei einer Drehbewegung (T, T') des Abtriebselementes (150, 150', 150") relativ zum Führungselement (160") mit Durchlassöffnungen (154a", 154b") an dem Abtriebselement (150, 150', 150") in Wirkverbindung treten.

## Claims

1. Apparatus for generating or converting a torque, having
- a stationary drive element (122, 122', 122"), and
- an output element (150, 150', 150") which can be rotated relative to the stationary drive element (122, 122', 122") and is configured to perform a linear movement relative to the drive element (122, 122', 122"),
the stationary drive element (122, 122', 122") being positively coupled to the output element (150, 150', 150") via an engagement into a groove (151, 151', 151") in such a way that, when the output element (150, 150', 150") is driven, the output element (150, 150', 150") at the same time performs a rotational movement (T, T') and a linear movement (C), the output element (150, 150', 150") being configured as a cylindrical hollow shaft, into which the stationary drive element (10, 120', 120") engages, **characterized in that** the output element (150, 150', 150") interacts with two stationary drive elements (122, 122', 122") and, together with the two stationary drive elements (122, 122', 122"), forms two chambers in the manner of a two-cylinder arrangement.

2. Apparatus according to Claim 1, **characterized in that** the drive element (122, 122', 122") is of stationary configuration and the output element (150, 150', 150") can be rotated about a rotational axis (D) relative to the drive element (122, 122', 122"), the linear movement (C) of the output element (150, 150', 150") being directed axially along the rotational axis (D) .

3. Apparatus according to Claim 1 or 2, **characterized in that** the drive element (122, 122', 122") and the output element (150, 150', 150") delimit a space (W, W1, W2), the volume of which changes periodically during a linear movement (C) in the form of a periodic reciprocating movement of the output element (150, 150', 150") relative to the drive element (122, 122', 122").

4. Apparatus according to Claim 3, **characterized in that** a fluid which is situated in the space (W) can be compressed by the linear movement (C) of the output element (150, 150', 150") relative to the drive element (122, 122', 122").

5. Apparatus according to Claim 4, **characterized in that** the apparatus (100, 100', 100") is configured for generating a torque, the space (W) serving as combustion chamber and, as a result of the positive coupling, the linear movement (C) of the output element (150, 150', 150") relative to the drive element (122, 122', 122") being converted into a rotational movement of the output element (150, 150', 150").

6. Apparatus according to Claim 5, **characterized in that** an inlet valve (101) and an outlet valve (102) for letting the fluid into and out of the space (W, W1, W2) are arranged on the drive element (122, 122', 122").

7. Apparatus according to Claim 5 or 6, **characterized in that** a spark plug (103) for igniting the fluid is arranged on the drive element (122, 122', 122").

8. Apparatus according to one of the preceding claims, **characterized in that** the groove (151) extends sinusoidally on the output element (150) and runs around on a side of the output element (150) of cylindrical configuration, which side faces the drive element (122).

9. Apparatus according to one of the preceding claims, **characterized in that** the groove (151') extends sinusoidally on a section (122b') of the drive element (122'), which section (122b') reaches around the output element (150'), and runs around on a side of the section (122b') of the drive element (122'), which side faces the output element (150').

10. Apparatus according to one of the preceding claims, **characterized in that** the output element (150, 150', 150") has an axially extending shank (154, 154'), on which an output shaft (130, 130') is arranged such that it can be displaced axially and in a positively locking manner in the circumferential direction.

11. Apparatus according to one of the preceding claims, **characterized in that** the output element (150, 150', 150") has a toothing system for interaction with a further output element (150, 150', 150").

12. Apparatus according to one of the preceding claims, **characterized in that** the output element (150, 150', 150") is guided in a stationary cylindrical guide element (160").

13. Apparatus according to Claim 12, **characterized in that** an inlet valve for letting a fluid in and an outlet valve for letting a fluid out are arranged on the cylindrical guide element (160"), which valves are formed by passage openings (162a", 162b", 163a", 163b") which enter into operative connection with passage openings (154a", 154b") on the output element (150, 150', 150") during a rotational movement (T, T') of the output element (150, 150', 150") relative to the guide element (160") .

## Revendications

1. Dispositif de production ou de conversion d'un couple, comprenant
- un élément d'entraînement fixe (122, 122', 122") et
- un élément de sortie (150, 150', 150") pouvant tourner par rapport à l'élément d'entraînement fixe (122, 122', 122"), lequel élément de sortie est réalisé pour effectuer un déplacement linéaire par rapport à l'élément d'entraînement (122, 122', 122"),
l'élément d'entraînement fixe (122, 122', 122") étant accouplé de manière forcée à l'élément de sortie (150, 150', 150") par le biais d'un engagement dans une rainure (151, 151', 151"), de telle sorte que, lorsque l'élément de sortie (150, 150', 150") est entraîné, l'élément de sortie (150, 150', 150") effectue simultanément un déplacement de rotation (T, T') et un déplacement linéaire (C), l'élément de sortie (150, 150', 150") étant réalisé sous forme d'arbre creux cylindrique dans lequel s'engage l'élément d'entraînement fixe (10, 120', 120"),
**caractérisé en ce que**
l'élément de sortie (150, 150', 150") coopère avec deux éléments d'entraînement fixes (122, 122' , 122") et forme, conjointement avec les deux éléments d'entraînement fixes (122, 122', 122"), deux chambres à la manière d'un agencement à deux cylindres.

2. Dispositif selon la revendication 1, **caractérisé en ce que** l'élément d'entraînement (122, 122', 122") est réalisé sous forme fixe et l'élément de sortie (150, 150', 150") peut tourner par rapport à l'élément d'entraînement (122, 122' , 122") autour d'un axe de rotation (D), le déplacement linéaire (C) de l'élément de sortie (150, 150', 150") étant orienté axialement le long de l'axe de rotation (D).

3. Dispositif selon la revendication 1 ou 2, **caractérisé en ce que** l'élément d'entraînement (122, 122', 122") et l'élément de sortie (150, 150', 150") délimitent un espace (W, W1, W2) dont le volume change périodiquement lors d'un déplacement linéaire (C) sous la forme d'un déplacement alternatif périodique de l'élément de sortie (150, 150', 150") par rapport à l'élément d'entraînement (122, 122', 122").

4. Dispositif selon la revendication 3, **caractérisé en ce qu'**un fluide se trouvant dans l'espace (W) peut être comprimé par le déplacement linéaire (C) de l'élément de sortie (150, 150', 150") par rapport à l'élément d'entraînement (122, 122', 122").

5. Dispositif selon la revendication 4, **caractérisé en ce que** le dispositif (100, 100', 100") est réalisé pour la production d'un couple, l'espace (W) servant de chambre de combustion et, au moyen de l'accouplement forcé, le déplacement linéaire (C) de l'élément de sortie (150, 150', 150") par rapport à l'élément d'entraînement (122, 122', 122") étant transformé en un déplacement de rotation de l'élément de sortie (150, 150', 150").

6. Dispositif selon la revendication 5, **caractérisé en ce qu'**une soupape d'admission (101) et une soupape d'échappement (102) sont disposées sur l'élément d'entraînement (122, 122', 122") pour l'admission du fluide dans l'espace (W, W1, W2) et pour son échappement hors de celui-ci.

7. Dispositif selon la revendication 5 ou 6, **caractérisé en ce qu'**une bougie d'allumage (103) pour enflammer le fluide est disposée sur l'élément d'entraînement (122, 122', 122").

8. Dispositif selon l'une quelconque des revendications précédentes, **caractérisé en ce que** la rainure (151) s'étend sous forme sinusoïdale sur l'élément de sortie (150) et parcourt le pourtour d'un côté, tourné vers l'élément d'entraînement (122), de l'élément de sortie (150) réalisé sous forme cylindrique.

9. Dispositif selon l'une quelconque des revendications précédentes, **caractérisé en ce que** la rainure (151') s'étend sous forme sinusoïdale sur une portion (122b') de l'élément d'entraînement (122') venant en prise autour de l'élément de sortie (150') et parcourt le pourtour d'un côté, tourné vers l'élément de sortie (150'), de la portion (122b') de l'élément d'entraînement (122').

10. Dispositif selon l'une quelconque des revendications précédentes, **caractérisé en ce que** l'élément de sortie (150, 150', 150") comprend une tige (154, 154') s'étendant axialement, sur laquelle est disposé un arbre de sortie (130, 130') de manière déplaçable axialement et de manière à s'engager par complémentarité de formes dans la direction périphérique.

11. Dispositif selon l'une quelconque des revendications précédentes, **caractérisé en ce que** l'élément de sortie (150, 150', 150") comprend une denture pour coopérer avec un élément de sortie (150, 150', 150") supplémentaire.

12. Dispositif selon l'une quelconque des revendications précédentes, **caractérisé en ce que** l'élément de sortie (150, 150', 150") est guidé dans un élément de guidage (160") cylindrique fixe.

13. Dispositif selon la revendication 12, **caractérisé en ce qu'**une soupape d'admission pour l'admission d'un fluide et une soupape d'échappement pour l'échappement d'un fluide sont disposées sur l'élément de guidage (160") cylindrique, lesquelles sont réalisées par des ouvertures de passage (162a" , 162b" , 163a" , 163b") qui viennent en liaison fonctionnelle avec des ouvertures de passage (154a", 154b") sur l'élément de sortie (150, 150', 150") lors d'un déplacement de rotation (T, T') de l'élément de sortie (150, 150', 150") par rapport à l'élément de guidage (160").
